# FASCICULE DE BREVET EUROPEEN

(11) **EP 2 911 978 B1**
(45) Date de publication et mention de la délivrance du brevet: **16.03.2022**
(21) Numéro de dépôt: 13789217.0
(22) Date de dépôt: 25.10.2013
(51) Int. Cl.: C01F 5/14, C01F 11/02, B01F 17/00

(54) **SUSPENSION CALCO-MAGNESIENNE MANIABLE**
MANIPULIERBARE CALCIUM-MAGNESIUM-SUSPENSION
HANDLEABLE CALCO-MAGNESIAN SUSPENSION

(30) Priorité: 25.10.2012 BE 201200719; 24.01.2013 US 201361756091 P
(43) Date de publication de la demande: 02.09.2015
(73) Titulaire: S.A. Lhoist Recherche et Développement, 1342 Ottignies-Louvain-la-Neuve (BE)
(72) Inventeur: LAURENT, Bernard, B-5170 Lustin (BE)
(74) Mandataire: Gevers Patents
(86) Numéro de dépôt international: PCT/EP2013/072350
(87) Numéro de publication internationale: WO 2014/064234

(56) Documents cités:
- EP-A1- 0 061 354
- EP-A1- 0 592 169
- EP-A1- 0 594 332
- WO-A1-2006/050567
- US-A- 4 375 526

## Description

La présente invention se rapporte à une suspension aqueuse calco-magnésienne, comprenant des particules solides répondant à la formule générale a Ca(OH)₂.b Mg(OH)₂.c MgO.dl dans une phase aqueuse à une concentration supérieure ou égale à 200 g/kg, où a, b et c représentent des fractions massiques dont la somme vaut de 90 à 100 %, et d vaut de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, et un additif simultanément réducteur de viscosité et modérateur d'augmentation de la viscosité.

Depuis de nombreuses années, diverses tentatives ont été mises en œuvre pour réduire la quantité d'eau utilisée dans les suspensions aqueuses calco-magnésiennes à l'aide de dispersants.

Au sens de la présente invention, on entend par les termes « suspension aqueuse calco-magnésienne », une suspension de particules solides répondant à la formule générale a Ca(OH)₂.b Mg(OH)₂.c MgO.dl dans une phase aqueuse à une concentration supérieure ou égale à 200 g/kg, où a, b et c représentent des fractions massiques dont la somme vaut de 90 à 100 % et d vaut de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃. Comme indiqué, les particules contiennent de 0 à 10% en fraction massique de matière I, laquelle peut évidemment contenir des impuretés, à savoir des phases dérivées de SiO₂, Al₂O₃, Fe₂O₃, MnO, P₂O₅ et/ou SO₃, représentant globalement quelques dizaines de grammes par kilogramme. Ces particules solides contiennent en tant que matière I de l'oxyde de calcium qui n'aurait pas été hydraté au cours de l'extinction, tout comme du carbonate de calcium CaCO₃ et/ou de magnésium MgCO₃, éventuellement combiné sous la forme de dolomie. Les laits de chaux constitueront donc un cas particulier d'application lorsqu'il s'agit d'une suspension de chaux éteinte, c'est-à-dire, un cas particulier de la formule générale, où les teneurs en Mg(OH)₂ ou MgO sont faibles et considérées comme impuretés.

Une suspension aqueuse calco-magnésienne de ce type peut être obtenue par extinction de chaux vive, de chaux vive dolomitique, de dolomie vive ou d'un mélange de celles-ci avec une quantité d'eau largement supérieure à la quantité d'eau stoechiométrique, c'est-à-dire à celle nécessaire pour obtenir des chaux (calciques ou dolomitiques) éteintes pulvérulentes ou par mélange des particules solides répondant à la formule générale a Ca(OH)₂.b Mg(OH)₂.c MgO.dl dans une phase aqueuse, où a, b et c représentent des fractions massiques dont la somme vaut de 90 à 100 %, et d vaut de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃.

Divers paramètres couramment utilisés permettent de caractériser les suspensions aqueuses calco-magnésiennes, les principaux étant la viscosité, la teneur en particules solides, la granulométrie de ces particules et la réactivité des particules solides (à savoir la vitesse de dissolution).

La viscosité est une propriété déterminante quant à la mise en œuvre et la manipulation (pompage, transport en conduite,...) de la suspension. A cette fin, l'expérience a permis d'établir que la viscosité dynamique de la suspension doit être inférieure à 2000 mPa.s (US 5616283) et qu'il est souhaitable de ne pas dépasser une viscosité dynamique de 1500 mPa. s (WO 2007110401).

D'une manière générale, la viscosité augmente lorsque la concentration en matière solide augmente et lorsque la taille des particules en suspension diminue.

La réactivité d'une suspension aqueuse calco-magnésienne est déterminée par la vitesse de dissolution des particules. Elle peut être mesurée par injection d'une petite quantité de la suspension dans un volume important d'eau déminéralisée. Cette mesure, basée sur l'enregistrement de l'évolution de la conductivité de la phase liquide résultante, a été mise au point pour le contrôle de la réactivité des laits de chaux destinés à l'adoucissement des eaux potables (v. Van Eckeren et cons. Improved milk-of-lime for softening of drinking water : the answer to the carry-over problem, in Aqua, 1994, 43 (1), p. 1-10). Plus de détails sur la procédure de mesure de cette réactivité des laits de chaux sont disponibles au § 6.11. « Détermination de l'index de solubilité par conductivité » de la norme EN 12485 : 2010.

La réactivité d'une suspension aqueuse calco-magnésienne est également déterminante pour toute opération de neutralisation ou précipitation.

Il est connu que la vitesse de solubilisation des particules solide d'une suspension aqueuse calco-magnésienne est d'autant plus rapide que la taille des particules est faible. De plus, une grande finesse des particules réduit généralement la sédimentation de la phase solide de la suspension.

D'une manière générale, il est économiquement avantageux de pouvoir augmenter la concentration du lait de chaux, afin de réduire les coûts de transport et la taille des équipements (réservoirs de stockage, pompes...).

On comprend la difficulté de concilier faible viscosité, concentration élevée et réduction de la taille des particules en suspension.

Malheureusement, même si une suspension aqueuse calco-magnésienne présente à un moment donné une viscosité dynamique inférieure à 1500 mPa.s, il n'en reste pas moins que la viscosité de telles suspensions est connue pour ne pas être stable et donc augmenter au cours du temps, ce qui représente un inconvénient majeur pour les utilisations dès lors que leur agitation devient problématique, et qu'elles sont difficilement transportables puisqu'elles ne restent pas pompables et risquent donc de bloquer et d'endommager les équipements de stockage et de transport.

Pour résoudre ces problèmes de stabilité, la littérature renseigne par exemple des suspensions aqueuses calco-magnésiennes concentrées, auxquelles un additif est ajouté ou dont les particules solides sont spécifiquement sélectionnées.

Il est connu d'améliorer la concentration du lait de chaux par ajout d'un agent dispersant, en présence d'une faible quantité d'un hydroxyde de métal alcalin [US 5616283]. Ce mode de préparation permet d'atteindre des concentrations supérieures à 40% de matière sèche, avec une viscosité dynamique inférieure à 2000 voire 1000 mPa s. Toutefois, l'utilisation de dispersant est coûteuse et incompatible avec certaines applications.

Il est également connu d'augmenter la concentration en phase solide dans la suspension, tout en limitant l'augmentation de viscosité, par incorporation d'une chaux éteinte présentant une taille des particules plus grossière ou par extinction de la chaux vive dans des conditions favorables à la croissance des grains, par exemple par limitation de l'augmentation de température lors de l'extinction, par ajout d'additifs tels que des sulfates, etc. [BE-1006655, US4464353]. De tels laits de chaux sont moins réactifs, ce qui en limite les utilisations. Par ailleurs, ces suspensions sédimentent plus rapidement, si aucun dispersant n'est ajouté.

On connait également du document EP1663869 une suspension aqueuse à base de chaux ou d'un composé de chaux à viscosité contrôlée, de préférence faible, afin de pouvoir en augmenter la concentration en matière solide et/ou réduire la taille des particules en suspension qui présente des particules de matière solide ayant, avant mise en suspension, une surface spécifique, déterminée selon la méthode BET, qui est inférieure ou égale à 10 m²_{/}g.

D'autres familles de dispersants ont été décrits, comme des dérivés de polysaccharides solubles, de polyacrylates, des polyamines et des polymères de type chlorure de diallyl ammonium (US4849128, US4610801).

D'autres polymères dispersants sont également connus des documents EP594332, EP592169 ou encore US4375526.

Plus particulièrement, le document WO2007110401 divulgue la possibilité de rendre stable des laits de chaux en maintenant au cours du temps des caractéristiques rhéologiques (comme la viscosité dynamique, le seuil de cisaillement ou la viscosité plastique) à des niveaux compatibles avec leur utilisation, leur mise en œuvre, leur manipulation optimale au cours du temps. Selon l'enseignement de ce document, ce résultat est atteint par l'addition d'un ou plusieurs additifs sélectionnés parmi les glucides ou certains de leurs dérivés, comme ceux obtenus par oxydation de ces glucides ou par hydrogénation de ces glucides.

Les additifs décrits dans ce document sont plus particulièrement les monosaccharides, les disaccharides, les oligosaccharides et les polysaccharides.

On connait aussi du document WO2006050567 des suspensions aqueuses de chaux éteinte à faible viscosité, stable durant la période de stockage, par combinaison de dispersant à base de glucose et d'un polycarboxylate.

On connaît du document EP 0594332 A1 des suspensions aqueuses de chaux stabilisées contenant environ 20 à 60% en poids de chaux et environ 0.05 à 10% en poids, par rapport à la chaux, d'un ou de plusieurs polymères dispersants anioniques et leurs sels.

On connaît du document EP 0592169 A1 des suspensions aqueuses d'hydroxyde de magnésium comprenant un ou plusieurs polymères dispersants et un ou plusieurs sels de métal alcalin solubles dans l'eau.

Malheureusement, ces enseignements, soit requièrent une combinaison d'additifs ou une chaux spécifique, soit font appel à des additifs en quantité importante et/ou incompatible avec certaines applications des laits de chaux, soit ceux-ci ne présentent pas la stabilité attendue de la viscosité au cours d'une période suffisamment longue (un à plusieurs jours).

Pour résoudre ce problème, il est prévu selon la présente invention une suspension aqueuse calco-magnésienne telle que définie dans la revendication 1. La suspension aqueuse calco-magnésienne selon la présente invention comprend donc un additif simultanément réducteur de viscosité et modérateur de l'augmentation de la viscosité, c'est-à-dire d'un additif qui permet d'atteindre à la fabrication une viscosité acceptable inférieure à 1500 mPa.s, de préférence inférieure à 1200 mPa.s et qui permettra de freiner son augmentation au cours du temps à l'entreposage de la suspension aqueuse calco-magnésienne et tout en impliquant une teneur réduite en additif, simultanément réducteur de viscosité et modérateur d'augmentation de la viscosité.

La suspension aqueuse calco-magnésienne selon la présente invention permet donc d'obtenir des concentrations en particules solides plus élevées que celles que l'on peut obtenir par une méthode conventionnelle tout en maintenant la viscosité à une valeur acceptable pour obtenir ainsi un lait de chaux plus facile à manipuler et à stocker. La suspension aqueuse calco-magnésienne selon la présente invention est donc fluide à haute concentration en particules solides, avec un apport moindre en matières organiques que celles apportées par les solutions actuelles. La fluidité est déterminée par la mesure de viscosité. Le terme fluide signifie que la viscosité est modérée, inférieure à 1500 mPa.s, en particulier inférieure ou égale à 1200 mPa.s, de préférence inférieure ou égale à 1000 mPa.s, plus préférentiellement inférieure ou égale à 800 mPa.s, avantageusement inférieure ou égale à 500 mPa.s.

Le phosphonate ou acide phosphonique présent dans la suspension aqueuse calco-magnésienne selon la présente invention permet non seulement de modérer la viscosité de la suspension aqueuse calco-magnésienne fraichement produite mais également d'agir comme un frein à l'augmentation de la viscosité au cours de la période de stockage.

Par conséquent, selon la présente invention, une suspension aqueuse calco-magnésienne hautement concentrée en particules solides peut être formulée suite à l'ajout du phosphonate ou de l'acide phosphonique en bénéficiant des deux effets suivants à savoir en agissant comme réducteur de viscosité et comme modérateur de l'augmentation de viscosité au cours du temps.

Au sens de la présente invention, on entend par les termes « modérateur de l'augmentation de la viscosité » que la viscosité reste inférieure ou égale à 1500 mPa.s, de préférence inférieure ou égale à 1200 mPa.s et plus préférentiellement inférieure ou égale à 1000 mPa.s, avantageusement inférieure ou égale à 800 mPa.s, encore plus avantageusement inférieure à 500 mPa.s, après au moins 2 semaines de stockage avec ou sans agitation, de préférence après 1 mois ou plus.

Les phosphonates ou acides phosphoniques sont typiquement des complexants, des chelatants, des agents polyfonctionnels actifs vis-à-vis d'ions métalliques.

Par définition, ils comportent au moins un groupement fonctionnel PO₃²⁻, sous forme acide ou de son sel correspondant, lié à un atome de carbone. Les propriétés des phosphonates résultent notamment de la liaison carbone-phosphore. Ces propriétés sont une forte charge anionique (négative), une grande solubilité dans l'eau, la stabilité dans les systèmes aqueux dans des conditions de température et de pH extrêmes et la multiplicité des sites de liaison. Les phosphonates présentent donc plusieurs fonctionnalités qui améliorent la performance des systèmes aqueux à savoir :
- une inhibition de la formation de tartre par effet de seuil,
- la séquestration (complexation/chélation des ions métalliques),
- la dispersion des particules solides en suspension, notamment la réduction des dépôts incrustant de tartre,
- une inhibition de la corrosion électrochimique.

Leurs propriétés fonctionnelles permettent d'employer ces agents dans de nombreux domaines.

Au sens de la présente invention, les termes « acide phosphonique » ou « phosphonate » englobent l'acide en tant que tel ou les sels conjugués ou leurs mélanges, l'acide pouvant être présent sous une forme partiellement ou totalement neutralisée, notamment par un composé alcalin comme le NaOH ou KOH. Les concentrations en phosphonate ou acide phosphonique, que l'additif soit sous forme acide, partiellement ou totalement neutralisé, sont exprimées en « acide actif ».

Il a été montré selon la présente invention que l'utilisation de phosphonate ou d'acide phosphonique dans des suspensions calco-magnésiennes permet une teneur en additif réduite par rapport aux additifs typiquement utilisés dans l'état de la technique, ce qui permet d'une part de maintenir les propriétés de la suspension calco-magnésienne et son efficacité, et d'autre part de réduire la DCO (demande chimique en oxygène) et le COT (carbone organique total) et donc l'impact environnemental des suspensions calco-magnésiennes utilisées dans certaines applications, où des contraintes réglementaires limitent l'utilisation de suspensions stabilisées avec des additifs principalement organiques et donc riches en carbone, tels que le sucre et/ou les polymères, comme c'est le cas pour le traitement de certains effluents liquides. De plus, la propension de l'additif à s'adsorber sur un support, réduit encore la DCO dans les applications où est effectuée une étape de séparation liquide/solide par rétention de l'essentiel de l'additif dans la phase solide.

De plus, suivant la présente invention, la présence du phosphonate ou de l'acide phosphonique dans des suspensions calco-magnésiennes permet à celui-ci de jouer son rôle d'inhibiteur d'entartrage (effet de seuil - « treshold effect »), conduisant à la réduction de la précipitation de carbonate ou de sulfate de calcium. Cet effet permet d'augmenter la concentration maximale de calcium à partir de laquelle un entartrage des équipements apparait lors de l'application de la suspension calco-magnésienne au traitement des effluents liquides.

Selon la présente invention, il a été observé de manière surprenante, que l'additif phosphonate ou acide phosphonique permet de produire des suspensions calco-magnésiennes de viscosité limitée et surtout de modérer l'augmentation de cette viscosité au cours du temps, voire même de réduire la viscosité durant une certaine période, lors du phénomène de maturation, des suspensions calco-magnésiennes. Une explication selon la présente invention réside dans le fait que les phosphonates sont totalement adsorbés sur les particules de Ca(OH)₂ et/ou de Mg(OH)₂ ce qui réduit la maturation de la suspension calco-magnésienne. Les particules d'hydrates sont chargées positivement. Les phosphonates présentent de fortes charges anioniques (négatives). Après neutralisation des particules de Ca(OH)₂, des quantités supplémentaires de phosphonates vont inverser la charge. Les charges négatives des groupes phosphonates vont se repousser les unes les autres; ce qui conduit les particules à se repousser également entre elles, réduisant par conséquent la décantation et la possibilité d'établissement d'interaction entre elles. Un autre avantage des suspensions selon l'invention est donc de présenter une moindre propension à la décantation. Enfin, lorsque la fluidité de la suspension calco-magnésienne est améliorée, la quantité d'eau peut être réduite et sa concentration et/ou sa finesse ainsi augmentée.

Bien entendu, selon l'invention, il est préférable d'avoir la décantation la plus réduite au cours du temps, afin de conserver une suspension la plus homogène possible sans nécessité d'agitation ultérieure qui contraint souvent de stocker la suspension calco-magnésienne dans un réservoir muni d'un agitateur.

On connait enfin du document JP57196748 la préparation de lait de chaux à partir de chaux vive avec une extinction à l'eau ou à l'aide d'une solution alcaline. Selon ce document, un additif à base d'acide carboxylique est ajouté, lequel peut être parmi d'autres additifs cités, de l'acide 2-phosphonobutane-1,2,4 tricarboxylique à raison de 1 à 30 g/tonne de chaux vive. Toutefois, aucune information réelle ne peut être déduite de ce document quant à la modération éventuelle de l'augmentation de la viscosité. Les très faibles quantités d'additifs mises en œuvre sont, en effet, a priori insuffisantes pour obtenir des suspensions calco-magnésiennes de viscosité modérée selon la présente invention.

Dans une forme de réalisation préférée de l'invention, ledit phosphonate ou acide phosphonique comprend, sous forme acide, de 2 à 8, de préférence de 2 à 6 groupes caractéristiques « acide phosphonique ».

Plus particulièrement, ledit phosphonate ou acide phosphonique est choisi dans le groupe constitué de l'acide aminotris(méthylènephosphonique) (ATMP), de l'acide 1-hydroxyéthylidène-1,1-diphosphonique (HEDP), de l'acide éthylènediamine tetrakis(méthylènephosphonique) (EDTMP), de l'acide hexaméthylènediamine tetrakis(méthylènephosphonique) (HDTMP), de l'acide diéthylènetriamine pentakis(méthylènephosphonique) (DTPMP), de l'acide (2-hydroxy)éthylamino-N,N-bis(méthylènephosphonique) (HEMPA), de l'acide 2-phosphono-1,2,4-butanetricarboxylique (PBTC), de l'acide 6-amino-1-hydroxyhexylène-N,N-diphosphonique (acide néridronique), de l'acide N,N'-bis(3-aminopropyl)éthylènediamine hexakis(méthylènephosphonique), de l'acide bis(hexaméthylènetriamine) pentakis(méthylènephosphonique), de l'oxyde de l'acide aminotris(méthylènephosphonique),leurs dérivés tels que leurs sels et leurs mélanges

Selon la présente invention, ledit phosphonate ou acide phosphonique est présent à une teneur en acide actif supérieure ou égale à 0,05 % en poids, de préférence supérieure ou égale à 0,1 % en poids, de manière plus préférentielle supérieure ou égale à 0,5 % en poids et en particulier supérieure ou égale à 0,8 % en poids, par rapport au poids total desdites particules solides.

Egalement, selon la présente invention, ledit phosphonate ou acide phosphonique est présent à une teneur en acide actif inférieure ou égale à 5 % en poids, de préférence inférieure ou égale à 3 % en poids, de manière plus préférentielle inférieure ou égale à 2 % en poids et en particulier inférieure ou égale à 1,5 % en poids, par rapport au poids total desdites particules solides.

Ces concentrations en additifs se sont en effet révélées optimales. En effet, d'une part, en dessous de ces concentrations, l'effet modérateur de l'augmentation de la viscosité n'est pas suffisant. D'autre part, au-dessus de ces concentrations, une diminution de la viscosité est toujours observée mais l'impact est réduit par rapport au surcout de l'ajout d'une teneur supérieure en additif. Rappelons que les suspensions calco-magnésiennes selon la présente invention doivent rester économiquement compétitives et qu'elles ne font typiquement pas partie des réactifs chimiques à très haute valeur ajoutée.

Avantageusement, la concentration desdites particules solides dans la phase aqueuse est supérieure ou égale à 300 g/kg et de préférence supérieure ou égale à 350 g/kg, plus préférentiellement supérieure ou égale à 400 g/kg, en particulier supérieure ou égale à 450 g/kg.

Dans une forme de réalisation préférentielle de la présente invention, lesdites particules solides sont des particules de chaux éteintes répondant à la formule a Ca(OH)₂.b Mg(OH)₂.c MgO.dl dans laquelle a est supérieure ou égale à 90%, de préférence, supérieure ou égale à 92 %, et de manière plus préférentielle supérieure ou égale à 94% en poids.

Dans un mode avantageux selon la présente invention, lesdites particules solides présentent une surface spécifique calculée selon la méthode BET comprise entre 4 et 25 m²_{/}g.

Dans un autre mode de réalisation tout aussi avantageux, lesdites particules solides présentent un d₅₀ mesuré par granulométrie laser compris entre 1 et 20 µm.

Dans la présente invention, la dimension dₓ (ci-dessus d₅₀) représente le diamètre des particules tel que x%, (ci-dessus 50%) des particules de la distribution sont de taille inférieure.

Il est préférable d'avoir une suspension calco-magnésienne, en particulier un lait de chaux, caractérisé par une fine distribution granulométrique pour favoriser un maintien en suspension le plus longtemps possible et obtenir simultanément une meilleure réactivité chimique. Afin d'assurer la granulométrie décrite, dans certaines formes de réalisations, les suspensions aqueuses calco-magnésiennes selon la présente invention seront soumises à une étape de broyage et éventuellement à une étape de tamisage.

D'autres formes de réalisations de la suspension aqueuse calco-magnésienne sont mentionnées dans les revendications annexées.

La présente invention se rapporte également à un procédé de fabrication d'une suspension aqueuse calco-magnésienne comprenant une formation de la suspension de particules solides répondant à la formule générale a Ca(OH)₂.b Mg(OH)₂.c MgO.dl où a, b et c sont des fractions massiques dont la somme vaut de 90 à 100%, et d valant de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, dans une première phase aqueuse, à une concentration supérieure ou égale à 200 g/kg de particules solides par rapport au poids de la suspension et une addition d'un additif simultanément réducteur de viscosité et modérateur d'augmentation de la viscosité.

Le procédé selon l'invention est caractérisé en ce que ledit additif est un phosphonate ou acide phosphonique, choisi parmi le groupe constitué des acides aminoalkylène polyphosphoniques, où le radical alkylène contient de 1 à 20 atomes de carbone, des acides hydroxyalkylidène polyphosphoniques, où le radical alkylidène contient de 2 à 50 atomes de carbone, des acides phosphono-alcanepolycarboxyliques, où le groupement alcane contient de 3 à 12 atomes de carbone et où le rapport molaire du radical acide alkylphosphonique au radical acide carboxylique est dans la plage de 1:2 à 1:4, de leurs dérivés, tels que leurs sels, et de leurs mélanges.

Dans une forme de réalisation particulière selon la présente invention, ladite étape de formation de la suspension de particules solides comprend un mélange des particules solides répondant à la formule générale a Ca(OH)₂.b Mg(OH)₂.c MgO.dl où a, b et c sont des fractions massiques dont la somme vaut de 90 à 100%, et d valant de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, avec ladite première phase aqueuse et correspond donc par exemple à une mise en suspension de particules solides de chaux éteinte pulvérulente avec une phase aqueuse ou à un mélange d'une phase solide pulvérulente comprenant les particules de chaux éteinte avec une phase aqueuse.

Dans une variante du procédé selon l'invention, ladite étape de formation de la suspension de particules solides comprend une étape de dilution d'une suspension concentrée desdites particules solides ou pâte concentrée desdites particules solides par ladite première phase aqueuse et correspond donc par exemple au cas de figure où un lait de chaux calcique ou dolomitique serait utilisé pour former la suspension calco-magnésienne selon l'invention.

Dans encore une variante selon la présente invention, ladite étape de formation de la suspension de particules solides comprend une étape d'extinction de chaux vive éventuellement dolomitique ou de dolomie vive par ladite première phase aqueuse avec obtention de la suspension aqueuse calco magnésienne de particules solides répondant à la formule générale précitée a Ca(OH)₂.b Mg(OH)₂.c MgO.dl. Dans ce cas précis, la suspension calco-magnésienne selon la présente invention est le résultat direct d'une extinction d'un composé vif, par exemple de la chaux vive par une phase aqueuse

Avantageusement, ladite addition dudit phosphonate ou acide phosphonique a lieu à ladite première phase aqueuse, avant, pendant ou après la formation de ladite suspension de particules solides.

Ledit additif simultanément réducteur de viscosité et modérateur d'augmentation de la viscosité sous la forme d'un phosphonate ou d'un acide phosphonique est donc, dans une forme de réalisation préférentielle, ajouté à la première phase aqueuse à laquelle seront ajoutées les particules de chaux éteintes, à la première phase aqueuse d'extinction, à la première phase aqueuse de dilution ou encore à la suspension calco-magnésienne formée selon la présente invention.

Dans une variante selon la présente invention, ledit phosphonate ou acide phosphonique est ajouté à la chaux ou dolomie vive, aux particules solides répondant à la formule générale précitée a Ca(OH)₂.b Mg(OH)₂.c MgO.dl ou encore à ladite suspension concentrée ou pâte concentrée desdites particules solides.

Dans une forme particulière de réalisation du procédé selon la présente invention, le pH de la première phase aqueuse est ajusté préalablement à l'addition de phosphonate ou acide phosphonique, de façon à garantir la solubilité totale de celui-ci.

Dans une autre forme de réalisation particulière du procédé selon l'invention, ledit phosphonate ou acide phosphonique est ajouté sous la forme d'une solution ou suspension dans une deuxième phase aqueuse.

Avantageusement, le pH de la deuxième phase aqueuse est ajusté préalablement à l'addition de phosphonate ou acide phosphonique, de façon à garantir la solubilité totale de celui-ci, en particulier à l'aide d'un additif basique, en particulier NaOH, KOH, NH₄OH et analogues.

Dans une autre variante selon la présente invention, ledit phosphonate est ajouté sous forme solide, en particulier sous forme acide ou sous forme de sel.

Avantageusement, selon l'invention, ledit phosphonate ou acide phosphonique comprend, sous forme acide, de 2 à 8, de préférence de 2 à 6 groupes caractéristiques « acide phosphonique ».

Plus particulièrement, ledit phosphonate ou acide phosphonique est choisi dans le groupe constitué de l'acide aminotris(méthylènephosphonique) (ATMP), de l'acide 1-hydroxyéthylidène-1,1-diphosphonique (HEDP), de l'acide éthylènediamine tetrakis(méthylènephosphonique) (EDTMP), de l'acide hexaméthylènediamine tetrakis(méthylènephosphonique) (HDTMP), de l'acide diéthylènetriamine pentakis(méthylènephosphonique) (DTPMP), de l'acide (2-hydroxy)éthylamino-N,N-bis(méthylènephosphonique) (HEMPA), de l'acide 2-phosphono-1,2,4-butanetricarboxylique (PBTC), de l'acide 6-amino-1-hydroxyhexylène-N,N-diphosphonique (acide néridronique), de l'acide N,N'-bis(3-aminopropyl)éthylènediamine hexakis(méthylènephosphonique), de l'acide bis(hexaméthylènetriamine) pentakis(méthylènephosphonique), de l'oxyde de l'acide aminotris(méthylènephosphonique),leurs dérivés tels que leurs sels et leurs mélanges

Plus particulièrement, ledit phosphonate ou acide phosphonique est un acide aminoalkylène polyphosphonique où le radical d'alkylène contient de 1 à 12 atomes de carbone, un acide hydroxyalkylène phosphonique où le radical d'alkylène contient de 2 à 12 atomes de carbone et 2 groupes d'acides phosphoniques ou encore un ou plusieurs acides phosphonoalcane polycarboxyliques où le groupement alkane contient de 4 à 8 atomes de carbone et où le rapport molaire du radical méthylphosphonique acide au radical acide carboxylique est dans la plage de 1:2 à 1:4."

Dans une forme de réalisation préférentielle, ledit phosphonate ou acide phosphonique est ajouté à une teneur en acide actif supérieure ou égale à 0,05 % en poids, de préférence supérieure ou égale à 0,1 % en poids, de manière plus préférentielle supérieure ou égale à 0,5 % en poids et en particulier supérieure ou égale à 0,8 % en poids, par rapport au poids total des particules solides.

Egalement, ledit phosphonate ou acide phosphonique est présent à une teneur en acide actif inférieure ou égale à 5 % en poids, de préférence inférieure ou égale à 3 % en poids, de manière plus préférentielle inférieure ou égale à 2 % en poids et en particulier inférieure ou égale à 1,5 % en poids, par rapport au poids total des particules solides.

Avantageusement, la concentration des particules solides dans la phase aqueuse est supérieure ou égale à 300 g/kg et de préférence supérieure ou égale à 350 g/kg, plus préférentiellement supérieure ou égale à 400g/kg, en particulier supérieure ou égale à 450g/kg.

Dans un aspect particulier de la présente invention, la suspension calco-magnésienne obtenue est désagglomérée dans un broyeur en voie humide afin d'atteindre la granulométrie souhaitée. Il a été également observé de manière surprenante que selon la présente invention, l'additif n'a pas uniquement vocation de réduire la viscosité et freiner l'augmentation de viscosité au cours du temps, mais il présente un avantage supplémentaire en ce qu'il améliore en outre l'incorporation d'hydrate (mouillage de l'hydrate) lors de la préparation de la suspension calco-magnésienne par mélange avec la phase aqueuse et agit comme agent de broyage lors du broyage humide

D'autres formes de réalisation du procédé selon la présente invention sont mentionnées dans les revendications annexées.

La présente invention se rapporte également à une utilisation d'un phosphonate ou d'acide phosphonique comme agent simultanément réducteur de viscosité et modérateur d'augmentation de la viscosité d'une suspension aqueuse calco-magnésienne comprenant des particules solides répondant à la formule générale a Ca(OH)₂.b Mg(OH)₂.c MgO.dl où a, b et c sont des fractions massiques dont la somme vaut de 90 à 100%, et d valant de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, en suspension dans une phase aqueuse à une concentration supérieure ou égale à 200 g de particules solides/kg de suspension, ledit phosphonate ou acide phosphonique étant choisi parmi le groupe constitué des acides aminoalkylène polyphosphoniques, où le radical alkylène contient de 1 à 20 atomes de carbone, des acides hydroxyalkylidène polyphosphoniques, où le radical alkylidène contient de 2 à 50 atomes de carbone, des acides phosphono-alcanepolycarboxyliques, où le groupement alcane contient de 3 à 12 atomes de carbone et où le rapport molaire du radical acide alkylphosphonique au radical acide carboxylique est dans la plage de 1:2 à 1:4, de leurs dérivés, tels que leurs sels, et de leurs mélanges.

De préférence, ledit phosphonate ou acide phosphonique comprend, sous forme acide, de 2 à 8, de préférence de 2 à 6 groupes caractéristiques « acide phosphonique ».

Plus particulièrement, ledit phosphonate ou acide phosphonique est choisi dans le groupe constitué de l'acide aminotris(méthylènephosphonique) (ATMP), de l'acide 1-hydroxyéthylidène-1,1-diphosphonique (HEDP), de l'acide éthylènediamine tetrakis(méthylènephosphonique) (EDTMP), de l'acide hexaméthylènediamine tetrakis(méthylènephosphonique) (HDTMP), de l'acide diéthylènetriamine pentakis(méthylènephosphonique) (DTPMP), de l'acide (2-hydroxy)éthylamino-N,N-bis(méthylènephosphonique) (HEMPA), de l'acide 2-phosphono-1,2,4-butanetricarboxylique (PBTC), de l'acide 6-amino-1-hydroxyhexylène-N,N-diphosphonique (acide néridronique), de l'acide N,N'-bis(3-aminopropyl)éthylènediamine hexakis(méthylènephosphonique), de l'acide bis(hexaméthylènetriamine) pentakis(méthylènephosphonique), de l'oxyde de l'acide aminotris(méthylènephosphonique), de leurs dérivés, tels que leurs sels et de leurs mélanges

Dans une utilisation préférentielle selon l'invention, ledit phosphonate ou acide phosphonique est présent à une teneur en acide actif supérieure ou égale à 0,05 % en poids, de préférence supérieure ou égale à 0,1 % en poids, de manière plus préférentielle supérieure ou égale à 0,5 % en poids et en particulier supérieure ou égale à 0,8 % en poids, par rapport au poids total des particules solides.

Egalement, ledit phosphonate ou acide phosphonique est présent à une teneur en acide actif inférieure ou égale à 5 % en poids, de préférence inférieure ou égale à 3 % en poids, de manière plus préférentielle inférieure ou égale à 2 % en poids et en particulier inférieure ou égale à 1,5 % en poids, par rapport au poids total des particules solides.

Avantageusement, la concentration de particules solides dans la phase aqueuse est supérieure ou égale à 300 g/kg et de préférence supérieure ou égale à 350 g/kg, plus préférentiellement supérieure ou égale à 400 g/kg, en particulier supérieure ou égale à 450g/kg.

La présente invention se rapporte également à une utilisation d'un phosphonate ou acide phosphonique comme additif réducteur de la décantation d'une suspension aqueuse calco-magnésienne comprenant des particules solides répondant à la formule générale a Ca(OH)₂.b Mg(OH)₂.c MgO.dl où a, b et c sont des fractions massiques dont la somme vaut de 90 à 100%, et d valant de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, en suspension dans une phase aqueuse à une concentration supérieure ou égale à 200 g/kg.

L'invention sera mieux décrite et comprise à la lumière des exemples donnés ci-après, à titre non limitatif. Dans les exemples 1 à 3 et 6 à 9, les laits de chaux sont préparés au laboratoire. Aux exemples 4, 5 et 11, les laits de chaux sont fabriqués industriellement.

### Exemple 1.- Utilisation de phosphonates pour améliorer la stabilité des suspensions de lait de chaux

Des suspensions de lait de chaux (LDC) sont préparées selon le processus suivant lors d'un essai à l'échelle du laboratoire.

Le phosphonate est d'abord dilué dans un récipient d'1 dm³ rempli avec de l'eau de distribution et équipé d'un agitateur muni d'un mobile à 4 pales. Toute l'eau nécessaire pour réaliser le LDC est ainsi traitée par le phosphonate ajouté.

Un hydrate sec provenant d'un site de production industriel (chaux éteinte) contenant 95,9 % d'hydroxyde de calcium est ensuite ajouté progressivement au mélange en agitant à 300 rpm. Après 10 minutes d'agitation, le LDC est transféré dans un récipient et stocké à 20°C pendant une période de temps prédéterminée allant jusqu'à 1 mois.

La concentration en hydrate (en matière solide) dans la suspension est de 45 % en poids et la surface spécifique mesurée selon la méthode BET en utilisant un appareil de marque Micromeritics Tristar après dégazage à 190°C, est de 8 m²_{/}g.

La courbe granulométrique, mesurée par granulométrie au laser par l'appareil Beckman Coulter LS 13 320 conduit aux données suivantes
d₁₀₀ = 92 µm
d₉₈ = 54 µm
d₉₅ = 42 µm
d₉₀ = 27 µm
d₅₀ = 2,1 µm
d25 = 1,3 µm.

Les différents phosphonates testés sont les suivants :
1. acide amino-tris-phosphonique méthylénique connu sous l'abréviation ATMP et commercialisé par Zschimmer and Schwarz , sous la forme d'une solution à 50 % d'acide actif, dénommée AP5.
2. acide diéthylènetriamine penta phosphonique méthylénique connu sous l'abréviation DTPMP et commercialisé par Zschimmer and Schwarz sous la forme d'une solution partiellement neutralisée sous forme de sel sodique à 52 % d'acide actif, dénommée D5012.
3. acide phosphonobutane-tricarboxylique connu sous l'abréviation PBTC et commercialisé par Zschimmer and Schwarz sous la forme d'une solution à 50 % d'acide actif, dénommée P50.
4. acide 6-amino-1-hydroxyhexylidène diphosphonique connu sous la dénomination acide néridronique commercialisé par Rhodia sous forme de poudre.
5. acide N,N'bis-(3aminopropyl)-éthylène diamine hexaméthylphosphonique commercialisé par Thermphos sous la forme d'une solution à 30 % d'acide actif, dénommée D2086.

Dans cet exemple, la proportion de phosphonates varie de 0,15 à 1 %, exprimé en acide actif par rapport au poids de l'hydrate (chaux éteinte). La viscosité exprimée en mPa.s est mesurée à 20°C avec un rhéomètre Brookfield DV III Ultra en utilisant un mobile LV tournant à 100 rpm. Le mobile n° 61 est utilisé pour une viscosité allant jusqu'à 60 mPa.s ; le mobile n° 62 pour des viscosités entre 60 et 300 mPa.s, le mobile n° 63 jusqu'à 1200 mPa.s. Le mobile n° 64 permet des mesures jusqu'à 6000 mPa.s. Cependant, au-delà d'une certaine valeur, la mesure est souvent instable. Pour cette raison, la mesure n'a pas été systématiquement réalisée pour des viscosités supérieures à 1200 mPa.s. La viscosité est mesurée sur la suspension de lait de chaux 1 heure après production (produit frais) et après 1-2-3 et 4 semaines. Avant chaque mesure, le LDC est homogénéisé par agitation mécanique. En l'absence d'additif, la viscosité d'un tel LDC à 45 % de matière solide est supérieure 3000 mPa.s, ce qui est une valeur de viscosité trop élevée pour être mesurée avec précision. Les résultats avec les additifs selon l'invention sont indiqués au tableau 1.

**Tableau 1.- Viscosité de LDC à 450g/kg de matière solide, traités avec différents additifs selon l'invention**

| | **Acide actif en %** | **Viscosité en mPa.s** | | | | |
|---|---|---|---|---|---|---|
| | | frais | 1 semaine | 2 semaines | 3 semaines | 4 semaines |
| ATMP | 0,25 | 1500 | | | | |
| | 0,5 | 1380 | | | | |
| | 1 | 440 | 880 | 1500 | | |
| DTPMP | 0,26 | 1900 | >1200 | | | |
| | 0,52 | 750 | >1200 | | | |
| | 1,04 | 150 | 140 | 140 | 200 | 200 |
| PBTC | 0,25 | 2070 | | | | |
| | 0,5 | 1500 | | | | |
| | 1 | 410 | 480 | 540 | 630 | 660 |
| Acide néridronique | 0,15 | 400 | 1150 | 1590 | 1650 | 1900 |
| | 0,25 | 190 | 880 | 1140 | 1280 | 1400 |
| | 0,5 | 22 | 660 | 650 | 640 | 650 |
| | 1 | 65 | 60 | 55 | 50 | 55 |
| Acide N,N'bis-(3-aminopropyl) éthylène diamine hexaméthyl-phosphonique | 0,15 | 570 | 795 | 910 | 950 | 1100 |
| | 0,3 | 470 | 670 | 770 | 840 | 870 |
| | 0,6 | 200 | 415 | 610 | 600 | 600 |

Comme on peut le constater du tableau ci-dessus, la viscosité initiale (LDC frais) des LDC selon l'invention est inférieure ou égale à 1500 mPa.s dans tous les cas dès qu'un ajout de 0,5 % d'acide actif est opéré. Pour la plupart des phosphonates, un ajout plus faible est même suffisant. Sauf pour l'ATMP, la viscosité augmente peu au cours du temps dès un dosage de 1% d'acide actif, voire inférieur. Avec 1% d'additif, dans certains cas moins, il est possible d'obtenir une viscosité à 2 semaines inférieure ou égale à 1500 mPa.s, parfois largement plus basse. Certains additifs ajoutés à 1% permettent de ne pas dépasser 200 mPa.s après 4 semaines.

L'efficacité des phosphonates est ensuite comparée avec le saccharose et un polymère (Tech 646 disponible auprès de la société Chryso) ainsi que leurs combinaisons selon l'art antérieur. Ces additifs sont typiquement connus de l'homme de l'art pour fluidifier les LDC. Le saccharose est ajouté de la même manière que le phosphonate alors que le polymère est ajouté sur la suspension broyée. Lorsque le saccharose est combiné à un polymère, la quantité d'additifs à ajouter est réduite.

Étonnamment, le phosphonate seul comme dans le cas du DTPMP permet d'obtenir un LDC plus fluide à de plus faibles doses que les additifs de l'art antérieur mais aussi avec une moindre augmentation de viscosité au cours du temps. Ainsi les propriétés rhéologiques du LDC obtenu en ajoutant 1% de DTPMP sont comparées notamment à celles d'un LDC obtenu avec 1,5% de saccharose. Les résultats sont indiqués au tableau 2.

**Tableau 2.- Viscosité de LDC à 450g/kg de matière solide, traités avec différents additifs selon l'art antérieur**

| **Saccharose %** | **Tech 646%** | **Viscosité en mPa.s** | | | | |
|---|---|---|---|---|---|---|
| | | frais | 1 semaine | 2 semaines | 3 semaines | 4 semaines |
| 0,75 | | 450 | 570 | 590 | 590 | 600 |
| 1,5 | | 330 | 370 | 360 | 350 | 345 |
| | 0,4 | 850 | 1750 | | | |
| | 0,8 | 165 | 410 | 790 | 950 | >1000 |
| **0,75** | **0,4** | **100** | **235** | **370** | **360** | **320** |

### Exemple 2.- Utilisation de DTPMP et/ou de l'acide néridronique pour améliorer la stabilité des suspensions de lait de chaux - cas d'un broyage humide

Des suspensions de lait de chaux ont été préparées selon le processus suivant lors d'un essai pilote. Le phosphonate est d'abord dilué dans un récipient de 10 dm³ rempli avec de l'eau de distribution et équipé d'un agitateur de type ancre. Toute l'eau nécessaire pour réaliser le LDC est ainsi additionnée de phosphonate.

Un hydrate sec d'origine industrielle (chaux éteinte) contenant environ 95 % d'hydroxyde de calcium est ensuite ajouté progressivement au mélange en remuant à 150 rpm. Après 30 minutes d'agitation, le LDC est transféré dans un broyeur humide équipé de billes de verre.

Après désagglomération, le LDC est mélangé à 150 rpm pendant 10 min puis versé dans un récipient et stocké pendant une période de temps prédéterminée allant jusqu'à 1 mois à 20°C. La teneur en hydrate (matière sèche) dans le lait de chaux est de 45 % en poids.

La courbe granulométrique de la chaux éteinte originale, mesurée par granulométrie au laser par l'appareil Beckman Coulter LS 13 320 conduit aux données suivantes
d₁₀₀ = 257 µm
d₉₈ = 121 µm
d₉₅ = 81 µm
d₉₀ = 58 µm
d₅₀ = 9,3 µm
d25 = 2,8 µm.

La surface spécifique de l'hydrate, analysé par adsorption d'azote selon la méthode BET en utilisant un Micromeritics TRISTAR, est de 6 m²_{/}g. Le débit du broyeur est ajusté pour obtenir un d₅₀ de 2,5 à 2,7 µm. La granulométrie typique après broyage humide est la suivante :
d₁₀₀ = 31 µm
d₉₈ = 11 µm
d₉₅ = 8,7 µm
d₉₀ = 7,3 µm
d₅₀ = 2,5 µm
d₂₅ = 1,4 µm.

Il n'est pas possible de produire un lait de chaux à 45% de matière solide avec un diamètre moyen de 2,5 µm sans additif. Le LDC engorgerait le broyeur humide.

La cinétique de décantation est mesurée en % de liquide surnageant (eau de chaux) par rapport au volume total après repos à 20°C pendant 1, 2, 3 et 4 semaines. Le surnageant est délimité par la frontière entre la suspension et la solution d'eau de chaux.

Les résultats de viscosité et décantation sont présentés respectivement aux tableaux 3 et 3bis.

**Tableau 3.- Viscosité de LDC à 450g/kg de solide, traités avec des additifs selon l'invention après broyage humide**

| **Acide actif en %** | | **Viscosité en mPa.s** | | | | |
|---|---|---|---|---|---|---|
| | | frais | 1 semaine | 2 semaines | 3 semaines | 4 semaines |
| DTPMP | 0,52 | 950 | 1050 | 1150 | 1200 | 1200 |
| | 0,78 | 590 | 420 | 400 | 385 | 395 |
| | 1,04 | 365 | 260 | 245 | 240 | 230 |
| Acide néridronique | 0,25 | 2100 | 2500 | 2750 | 3000 | 2850 |
| | 0,75 | 78 | 56 | 62 | 68 | 80 |

**Tableau 3 bis.- Décantation de LDC à 450g/kg de solide, traités avec le DTMP selon l'invention après broyage humide**

| **Acide actif en %** | | **Décantation (% de liquide surnageant au repos)** | | | |
|---|---|---|---|---|---|
| | | 1 semaine | 2 semaines | 3 semaines | 4 semaines |
| DTPMP | 0,52 | 11 | 16 | 18 | 19 |
| | 0,78 | 7 | 14 | 18 | 18 |
| | 1,04 | 2 | 3 | 4 | 7 |

Dès que la dose d'additif est supérieure ou égale à 0,5 % en acide actif, la viscosité est inférieure ou égale à 1200 mPa.s même après 4 semaines et augmente peu voire diminue au cours du temps par rapport à la viscosité initiale. Dès 0,75 % d'acide actif, la viscosité à 4 semaines est inférieure ou égale à 400 mPa.s, voire largement plus basse. On peut même obtenir avec 0,75% d'acide néridronique une valeur de 78 mPa.s sur produit frais sans que celle-ci ne change significativement après 1 mois de stockage.

L'efficacité des phosphonates est comparée avec le saccharose et un polymère (Tech 646 de Chryso) ainsi que leurs combinaisons, comme à l'exemple 1 et les résultats sont présentés respectivement aux tableaux 4 et 4 bis.

**Tableau 4.- Viscosité de LDC à 450g/kg de solide, traités avec des additifs selon l'art antérieur après broyage humide**

| **Saccharose %** | **Tech 646%** | **Viscosité en mPa.s** | | | | |
|---|---|---|---|---|---|---|
| | | frais | 1 semaine | 2 semaines | 3 semaines | 4 semaines |
| 0,7 | 0,26 | 360 | 1980 | 2130 | 2200 | 2400 |
| 0,7 | 0,40 | 290 | 1600 | 1700 | 1890 | 2000 |
| 1 | 0,40 | 190 | 480 | 820 | 860 | 880 |
| 1 | 0,66 | 135 | 340 | 560 | 620 | 625 |

**Tableau 4 bis.- Décantation de LDC à 450g/kg de solide, traités selon l'art antérieur après broyage humide**

| Saccharose % | Tech **646%** | Décantation (% de liquide surnageant au repos) | | | |
|---|---|---|---|---|---|
| | | 1 semaine | 2 semaines | 3 semaines | 4 semaines |
| 0,7 | 0,26 | 4 | 4 | 4 | 4 |
| 0,7 | 0,40 | 4 | 4 | 5 | 5 |
| 1 | 0,40 | 7 | 9 | 10 | 11 |
| 1 | 0,66 | 9 | 9 | 11 | 11 |

De façon surprenante, les phosphonates sont de bien meilleurs modérateurs d'augmentation de la viscosité au cours du temps que les combinaisons connues à ce jour. On constate que l'acide néridronique à une teneur de 0,75 % est nettement meilleur que la combinaison 1 % saccharose + 0,66 % Tech 646. Il en va de même pour le DTPMP après une semaine de stockage ou plus.

Concernant la décantation, la comparaison des tableaux 3, 3bis d'une part et 4, 4bis, d'autre part, montre :
- qu'avec le saccharose + polymère tech 646 (art antérieur), toute augmentation de dosage d'additifs s'accompagne d'une réduction de viscosité mais entraine à contrario une *augmentation* indésirable de la décantation.
- qu'avec le DTPMP (selon l'invention), toute augmentation de dosage d'additif s'accompagne d'une réduction de viscosité et d'une *réduction* favorable de la décantation

### Exemple 3.- Utilisation de DTPMP (sous la forme de D5012 de Zschimmer et Schwarz) pour améliorer la fluidité de suspensions de lait de chaux - cas de chaux éteintes de différentes distribution de tailles de particules.

L'exemple 1 est reproduit à l'exception du fait que les trois hydrates testés, également d'origine industrielle (chaux éteintes) ont les caractéristiques suivantes.

La surface spécifique analysée par adsorption d'azote selon la méthode BET utilisant un Micromeritics Tristar est de 18 m2/g.

La courbe granulométrique, mesurée par granulométrie au laser par l'appareil Beckman Coulter LS 13 320 conduit aux données présentées au tableau 5.

**Tableau 5.- Distribution granulométrique des 3 chaux éteintes industrielles utilisées pour prépare le LDC**

| Taille des particules | Hydrate 1 (fin) | Hydrate 2 (moyen) | Hydrate 3 (grossier) |
|---|---|---|---|
| d₁₀₀ | 194 µm | 257 µm | 257 µm |
| d98 | 73 µm | 129 µm | 137 µm |
| d95 | 53 µm | 92 µm | 113 µm |
| d₉₀ | 29,7 | 68 µm | 89 µm |
| d₅₀ | 5,3 µm | 6,5 µm | 12,2 µm |
| d25 | 2,8 µm | 2,8 µm | 2,8 µm |

L'hydrate sec contient environ 95 % d'hydroxyde de calcium. Les quantités de D5012 sont respectivement de 0,25 ; 0,5 ; 1 et 4,5 % exprimé en produit commercial, ce qui signifie que la quantité d'ingrédient actif exprimé en acide actif est 0,13 ; 0,26 ; 0,52 et 2,34% exprimé par rapport au poids de l'hydrate. La teneur en hydrate est de 40 % en poids. Les résultats de propriétés rhéologiques sont indiquées au tableau 6 pour des teneurs variables en DTPMP.

**Tableau 6.- Viscosité de LDC à 400g/kg de chaux 1,2 ou 3 du tableau 5, traités avec du DTMP selon l'invention**

| Hydrate | Acide actif en % | Viscosité en mPa.s | | | | |
|---|---|---|---|---|---|---|
| | | frais | 1 semaine | 2 semaines | 3 semaines | 4 semaines |
| 1 | 0 | 1100 | 2200 | 2500 | 2600 | 3000 |
| 1 | 0,13 | 370 | 600 | 650 | 860 | 1200 |
| 1 | 0,26 | 310 | 560 | 600 | 550 | 630 |
| 1 | 0,52 | 260 | 425 | 470 | 475 | 505 |
| 2 | 0 | 370 | 970 | 1150 | 1250 | 1350 |
| 2 | 0,13 | 150 | 225 | 240 | 285 | 330 |
| 2 | 0,26 | 115 | 190 | 200 | 215 | 240 |
| 2 | 0,52 | 85 | 135 | 150 | 165 | 200 |
| 3 | 0 | 265 | 540 | 725 | 860 | 1300 |
| 3 | 0,13 | 125 | 190 | 210 | 220 | 235 |
| 3 | 0,26 | 90 | 140 | 160 | 170 | 190 |
| 3 | 0,52 | 65 | 100 | 115 | 125 | 150 |

Pour les 3 chaux éteintes, les suspensions présentent des viscosités acceptables même après 4 semaines dès un dosage de 0,13% en acide actif. Des viscosités inférieures à 400 mPa.s, parfois largement, sont obtenues dans le cas des deux dernières chaux éteintes, quasiment sans évolution dans le temps.

L'efficacité du D5012 est ensuite comparée avec le saccharose. Les données rhéologiques obtenues sont présentées au tableau 7.

**Tableau 7.- Viscosité de LDC à 400g/kg de chaux 1,2 ou 3 du tableau 5, traités selon l'art antérieur**

| Hydrate | Saccharose en % | Viscosité en mPa.S | | | | |
|---|---|---|---|---|---|---|
| | | frais | 1 semaine | 2 semaines | 3 semaines | 4 semaines |
| 1 | 0,25 | 300 | 1200 | > 1200 | > 1200 | > 1200 |
| 1 | 0,5 | 240 | 750 | 650 | 710 | 820 |
| 1 | 1 | 220 | 435 | 390 | 405 | 540 |
| 2 | 0,25 | 100 | 270 | 295 | 340 | 380 |
| 2 | 0,5 | 80 | 140 | 140 | 160 | 180 |
| 2 | 1 | 65 | 100 | 100 | 105 | 120 |
| 3 | 0,25 | 83 | 110 | 120 | 135 | 160 |
| 3 | 0,5 | 70 | 90 | 95 | 110 | 120 |
| 3 | 1 | 50 | 65 | 70 | 75 | 80 |

On constate que le DTMP permet d'obtenir un LDC plus fluide à des doses plus faibles qu'avec la saccharose.

L'efficacité du DTPMP est ensuite testée dans le cas de suspensions (LDC) plus concentrées (450g/kg et 500g/kg) à partir de l'hydrate n°2. Les données rhéologiques obtenues sont présentées au tableau 8.

**Tableau 8.- Viscosité de LDC à 450g/kg et 500g/kg de chaux 2 du tableau 5, traités selon l'invention**

| **Teneur en solide %** | **Acide actif %** | **Viscosité en mPa.S** | | | | |
|---|---|---|---|---|---|---|
| | | frais | 1 semaine | 2 semaines | 3 semaines | 4 semaines |
| 45 | 0,26 | 360 | 585 | 710 | 730 | 860 |
| 45 | 0,52 | 280 | 450 | 615 | 645 | 770 |
| 50 | 2,34 | 680 | 1050 | 1280 | 1300 | 1380 |

La teneur en hydrate varie de 45 à 50 % en poids. Comme on peut le constater, le D5012 à 0,26 % en matière active permet de maintenir fluide un LDC à 45 % en poids.

Des LDC à 50 % sont même envisageables tout en conservant une viscosité inférieure à 1500 mPa.s après 4 semaines.

### Exemple 4.- Utilisation de DTPMP pour améliorer la stabilité d'une suspension broyée de lait de chaux produite à l'échelle industrielle.

Une suspension de lait de chaux suivant l'invention est préparée industriellement selon le processus suivant.

225 kg de D5012 (DTPMP commercialisé par Zschimmer and Schwarz) sont dissous dans une cuve agitée contenant 13,5 m³ d'eau.

Après homogénéisation, on ajoute progressivement pendant ½ heure 11,3 tonnes d'hydrate à basse surface spécifique (8 m²/g) ayant 6,7 µm de diamètre moyen d₅₀.

La suspension ainsi obtenue à 45% de matière solide (hydrate) est ensuite désagglomérée dans un broyeur humide jusqu'à atteindre un d₅₀ de 3,2 µm et un d₉₈ inférieur à 10 µm. Les résultats des mesures de viscosité sont présentés au tableau 9.

**Tableau 9.- Viscosité d'un LDC industriel à 450 g/kg de solide, traité au DTMP selon l'invention**

| Acide actif | % d'acide actif | Viscosité en mPa.s | | | | | |
|---|---|---|---|---|---|---|---|
| | | Frais | 1 jour | 2 jours | 3 jours | 5 jours | 11 jours |
| DTPMP | 1,04 | 520 | 410 | 390 | 375 | 350 | 350 |

On constate tout comme dans les essais à l'échelle du laboratoire (exemple 2, tableau 3) que la viscosité chute au cours du temps. Les valeurs de viscosité sont cohérentes avec l'échelle du laboratoire même si les niveaux de viscosité sont un peu plus élevés qu'à l'exemple 2 pour le même traitement.

L'efficacité du DTPMP est comparée à une suspension de l'art antérieur préparée de façon analogue mais avec le saccharose et un polymère (Tech 646 de Chryso). Les résultats des mesures de viscosité sont présentés au tableau 10.

**Tableau 10.- Viscosité de LDC industriel à 450 g/kg de solide, traité selon l'art antérieur**

| Saccharose % | Tech 646 % | Viscosité en mPa.s | | | | | |
|---|---|---|---|---|---|---|---|
| | | Frais | 1 jour | 2 jours | 3 jours | 5 jours | 11 jours |
| 0,75 | 0,4 | 270 | 490 | 500 | 510 | 560 | 605 |

On observe que la viscosité d'une suspension formulée avec 0,75% de saccharose et 0,4% de polymère augmente après 11 jours de 270 à 605 mPa.s.

La même suspension réalisée avec 1,04% de DTPMP voit au cours de la même période sa viscosité décroître de 520 à 330 mPa.s.

En freinant l'augmentation de viscosité, voire même en diminuant la viscosité, le DTPMP présente l'avantage supplémentaire de pouvoir tolérer une viscosité de départ plus élevée. Ceci a pour effet de réduire la tendance à la décantation.

En effet, dans l'état de l'art actuel, celle-ci se produit généralement dans les premiers jours après production, soit lorsque la viscosité est la plus basse.

La diminution de la viscosité du lait de chaux au cours du temps produit avec le DTPMP présente donc l'avantage supplémentaire de réduire la tendance à la décantation. Sur produit frais, la suspension préparée avec du DTPMP possède une viscosité initiale plus élevée que celle de l'art antérieur, ce qui va ralentir la cinétique de décantation.

### Exemple 5. Utilisation de DTPMP pour améliorer la stabilité d'une suspension de granulométrie moyenne de lait de chaux produite à l'échelle industrielle.

40 tonnes de lait de chaux (LDC) à 40 % de matière solide avec 0,25 % (exprimé par rapport à l'hydrate) de D5012 commercialisé par Zschimmer and Schwarz sont produites à partir d'un mélange d'eau et de l'hydrate 2 de granulométrie moyenne de l'exemple 3 tableau 5.

Contrairement à l'essai du laboratoire correspondant, le lait de chaux industriel est maintenu sous agitation permanente dans sa cuve de préparation. Les résultats de viscosités sont présentés au tableau 11.

**Tableau 11.- Viscosité de LDC à 400g/kg de chaux 2 du tableau 5**

| Acide actif | % d'acide actif | Viscosité en mPa.s | | | | |
|---|---|---|---|---|---|---|
| | | Frais | 3 jours | 10 jours | 17 jours | 35 jours |
| DTPMP | 0,13 | 200 | 200 | 260 | 330 | 450 |

On constate que seulement 0,13% de DTPMP exprimé sur l'hydrate sec permet de maintenir la viscosité à 450 mPa.s après plus d'un mois sous agitation permanente.

Un échantillon laissé au repos pendant cette même période possède une viscosité de 310 mPa.s ; soit une valeur analogue à celle obtenue dans l'exemple 3 tableau 6 lors des essais à l'échelle du laboratoire.

### Exemple 6. Utilisation de DTPMP pour réduire la cinétique de décantation d'une suspension grossière de lait de chaux.

Les essais de l'exemple 2 sont reproduits dans le but de mesurer la cinétique de décantation dans le cas du LDC après broyage humide à 450g/kg de matière solide.

La courbe granulométrique mesurée par granulométrie au laser par l'appareil Beckman coulter LS 13320 conduit aux données suivantes :
D₁₀₀ = 41 µm
D₉₈= 13 µm
D₉₅= 10 µm
D₉₀= 8 µm
D₅₀= 2,6 µm
D25= 1,3 µm.

La cinétique de décantation est mesurée en % de liquide surnageant par rapport au volume total après repos à 20°C pendant 1 jour, 1,2,3 et 4 semaines. Les résultats de viscosité et décantation des laits de chaux selon l'invention, préparés avec du DTPMP, sont présentés aux tableaux 12 A et 12 B. Le tableau 12A présente les résultats de viscosité qui sont cohérents avec ceux du tableau 3.

**Tableau 12 A.- Viscosité de LDC à 450g/kg de matière solide traités avec du DTMP selon l'invention après broyage humide**

| Acide actif | % d'acide actif | Viscosité en mPa.s | | | | |
|---|---|---|---|---|---|---|
| | | Frais | 1 semaine | 2 semaines | 3 semaines | 4 Semaines |
| DTPMP | 0,52 | 790 | 650 | 695 | 755 | 760 |
| | 0,78 | 515 | 360 | 345 | 320 | 335 |
| | 1,04 | 450 | 350 | 345 | 350 | 340 |
| | 1,56 | 380 | 295 | 290 | 290 | 280 |

**Tableau 12 B.- Décantation de LDC à 450g/kg de solide traités avec le DTMP selon l'invention après broyage humide**

| Acide actif | % d'acide actif | Décantation (% eau de chaux au repos) | | | | |
|---|---|---|---|---|---|---|
| | | 1 jour | 1 semaine | 2 semaines | 3 semaines | 4 semaines |
| DTPMP | 0,52 | 4 | 9 | 12 | 13 | 14 |
| | 0,78 | 3 | 7 | 7 | 8 | 9 |
| | 1,04 | 3 | 7 | 8 | 8 | 9 |
| | 1,56 | 2 | 7 | 7 | 7 | 7 |

On constate tout comme dans l'exemple 2 tableau 3 que l'augmentation du dosage de DTPMP réduit significativement la viscosité mais de façon surprenante réduit également la cinétique de décantation.

Ce phénomène est inattendu en ce sens qu'une viscosité faible est connue par l'homme de l'art comme facteur augmentant la décantation.

Toute réduction de décantation est appréciée de l'utilisateur final en ce sens qu'elle réduit les besoins d'agitation, permet davantage le stockage en petits conditionnements, facilite la remise en suspension et entraine moins de bouchage de tuyauteries.

L'efficacité du DTPMP est comparée à un lait de chaux selon l'art antérieur, préparé avec du saccharose et un polymère (Tech 646 de Chryso). Les résultats sont présentés aux tableaux 13 A et B.

**Tableau 13 A.- Viscosité de LDC à 450g/kg de matière solide préparés selon l'art antérieur**

| Saccharose | Tech 646 | Viscosité en mPa.s | | | | |
|---|---|---|---|---|---|---|
| % | % | Frais | 1 semaine | 2 semaines | 3 semaines | 4 semaines |
| 1 | 0,66 | 105 | 250 | 435 | 505 | 500 |

**Tableau 13 B.- Décantation de LDC à 450g/kg de solide préparés selon l'art antérieur**

| Saccharose | Tech 646 | Décantation (% eau de chaux au repos) | | | | |
|---|---|---|---|---|---|---|
| % | % | 1 jour | 1 semaine | 2 semaines | 3 semaines | 4 semaines |
| 1 | 0,66 | 5 | 14 | 15 | 15 | 15 |

On constate que le lait de chaux produit au départ de DTPMP entraine moins de décantation que celui de l'art antérieur.

### Exemple 7. Utilisation de DTPMP pour améliorer la stabilité d'une suspension de lait de chaux de granulométrie moyenne maintenue à 45°C.

Des suspensions de lait de chaux à 40% sont réalisées à partir de l'hydrate 2 du tableau 5, comme décrit dans l'exemple 3 au tableau 6. Ces suspensions sont stockées sans agitation à 4, 20 et 45°C dans le but de mesurer leur maturation, dont il est connu de l'homme de l'art qu'elle est accélérée par la température.

Les résultats sont présentés au tableau 14.

**Tableau 14. Influence du DTPMP sur la maturation d'un LDC à 40% stocké à 45°C.**

| Acide actif | % d'acide actif | Température en C° | Viscosité en mPa.s | |
|---|---|---|---|---|
| | | | Frais | 4 semaines |
| | 0 | 4 | 330 | 635 |
| | 0 | 20 | | 1150 |
| | 0 | 45 | | 1500 |
| DTPMP | 0,26 | 4 | 130 | 305 |
| | 0,26 | 20 | | 195 |
| | 0,26 | 45 | | 260 |

On constate que 0,26% de DTPMP permet de maintenir la viscosité de la suspension ayant maturé à 45°C bien en dessous de 500 mPa.s après 4 semaines alors que la même suspension sans additif ne possède plus une viscosité acceptable.

### Exemple 8. Utilisation de DTPMP pour améliorer la stabilité d'une suspension broyée de lait de chaux maintenue à 45°C.

Les échantillons de l'exemple 6 sont soumis au même test que ceux décrits dans l'exemple 7. L'efficacité du DTPMP est comparée à un lait de chaux selon l'art antérieur préparé avec du saccharose et un polymère (tech 646 de Chryso).

**Tableau 15. Influence du DTPMP sur la maturation d'un LDC broyé à 45% stocké à 45°C.**

| Acide actif | % d'acide actif | Température en C° | Viscosité en mPa.s | |
|---|---|---|---|---|
| | | | Frais | 4 semaines |
| DTPMP | 0,52 | 4 | | 665 |
| | 0,52 | 20 | 725 | 765 |
| | 0,52 | 45 | | 1010 |
| | 1,04 | 4 | | 300 |
| | 1,04 | 20 | 320 | 320 |
| | 1,04 | 45 | | 340 |
| | 1,56 | 4 | | 105 |
| | 1,56 | 20 | 105 | 110 |
| | 1,56 | 45 | | 125 |

On constate que le lait de chaux formulé au départ de 1,04% ou 1,56% de DTPMP ne vieillit pas à 45°C ; ce qui n'est pas le cas avec 1% de saccharose et 0,6% de Tech 646 (tableau 16).

**Tableau 16. Influence du saccharose+polymère sur la maturation d'un LDC broyé à 45% stocké à 45°C.**

| Saccharose % | Tech 646 % | Température en C° | Viscosité en mPa.s | |
|---|---|---|---|---|
| | | | Frais | 4 semaines |
| 1 | 0,66 | 4 | | 400 |
| 1 | 0,66 | 20 | 410 | 455 |
| 1 | 0,66 | 45 | | 610 |

### Exemple 9. Utilisation d'ATMP et de PBTC pour supprimer la décantation d'une suspension broyée de lait de chaux à 45%.

Des suspensions de lait de chaux ont été préparées selon le processus de l'exemple 2 en utilisant du DTPMP, de l'ATMP et du PBTC.

Les résultats de viscosité sont présentés au tableau 17.

Comme déjà illustré dans l'exemple 1 tableau 1, l'ATMP et le PBTC ne sont pas les phosphonates les plus performants en terme d'efficacité pour réduire la viscosité.

Par contre, à un dosage adapté, ils arrivent tout comme le DTPMP à freiner l'augmentation de viscosité voire à la réduire au cours du temps.

**Tableau 17 : Influence de l'ATMP et du PBTC sur la viscosité d'une suspension de lait de chaux finement broyée à 45% de matières solides.**

| Acide actif en % | | Viscosité en mPa.s | | | | |
|---|---|---|---|---|---|---|
| | | frais | 1 semaine | 2 semaines | 3 semaines | 4 semaines |
| DTPMP | 1,04 | 380 | 310 | 300 | 305 | 280 |
| | 1,56 | 410 | 325 | 310 | 310 | 315 |
| ATMP | 1 | 870 | 765 | 740 | 730 | 735 |
| | 1,75 | 1000 | 1015 | 965 | 955 | 925 |
| PBTC | 1 | 910 | 810 | 810 | 855 | 860 |
| | 1,25 | 1060 | 975 | 960 | 975 | 970 |
| ATMP+PBTC | 0,5% chacun | 840 | 810 | 795 | 800 | 810 |
| | 0,62% chacun | 860 | 825 | 830 | 820 | 830 |

En ciblant une viscosité autour de 700 à 800 mPa.s, parfaitement acceptable pour la manipulation de la suspension, il est possible de la maintenir à ce niveau au cours du temps et d'empêcher toute décantation pour des laits traités à l'ATMP ou au PBTC, comme le montre le tableau 18.

**Tableau 18. : Influence de l'ATMP et du PBTC sur la décantation d'une suspension de lait de chaux finement broyée à 45% de matières solides.**

| Acide actif en % | | Décantation (%de liquide surnageant au repos) | | | |
|---|---|---|---|---|---|
| | | 1 jour | 1 semaine | 2 semaines | 3 semaines |
| DTPMP | 1,04 | 0,7 | 3,5 | 6,0 | 7,8 |
| | 1,56 | 0,8 | 2,8 | 4 | 4,8 |
| ATMP | 1 | 0,1 | 0,3 | 0,3 | 0,5 |
| | 1,75 | 0,1 | 0,1 | 0,5 | 0,8 |
| PBTC | 1 | 0,3 | 0,3 | 0,3 | 0,3 |
| | 1,25 | 0,1 | 0,1 | 0,3 | 0,3 |
| ATMP+PBTC | 0,5% chacun | 0,5 | 0,5 | 0,5 | 0,5 |
| | 0,62% chacun | 0,5 | 0,5 | 0,5 | 0,5 |

Ici encore, on constate que le lait de chaux formulé au départ de phosphonates ne vieillit pas; ce qui n'est pas le cas avec 1% de saccharose et 0,6% de Tech 646 (tableau 19 et 20).

**Tableau 19 : influence du saccharose + polymère sur la viscosité d'une suspension de lait de chaux finement broyée à 45% de matières solides.**

| Saccharose % | Tech 646 % | Viscosité en mPa.s | | | | |
|---|---|---|---|---|---|---|
| | | Frais | 1 semaine | 2 semaines | 3 semaines | 4 semaines |
| 1 | 0,66 | 95 | 145 | 200 | 250 | 275 |
| 1 | 0,26 | 240 | 455 | 725 | 820 | 860 |

On observe que la suspension formulée au départ de saccharose + polymère décante plus rapidement, surtout lors des premiers jours.

**Tableau 20. : influence du saccharose + polymère sur la décantation d'une suspension de lait de chaux finement broyée à 45% de matières solides.**

| Saccharose % | Tech 646 % | Décantation (% de liquide surnageant au repos) | | | |
|---|---|---|---|---|---|
| | | 1 jour | 1 semaine | 2 semaines | 3 semaines |
| 1 | 0,66 | 8,0 | 19 | 19 | 19 |
| 1 | 0,26 | 0,5 | 5 | 5 | 5 |

De façon surprenante, alors que l'homme de l'art s'accorde à considérer qu'il est impossible d'empêcher un lait de chaux de décanter, l'ATMP et le PBTC suppriment quasiment toute décantation d'un LDC à 45% broyé finement.

La suspension a été introduite dans des cylindres gradués de 35 cm de hauteur, diamètre 6,5 cm. A intervalles réguliers, la colonne de lait de chaux a été séparée en 3 (fraction haute, moyenne et basse). Chacune des fractions a été caractérisée en termes de granulométrie, viscosité et extrait sec. Les résultats de la caractérisation des laits des tableaux 17 et 18 traité avec ATMP + PBTC à 0,5% d'acide actif chacun sont présentés dans le tableau 21.

On constate que la suspension reste homogène en termes de concentration, granulométrie et viscosité au travers de toute la colonne de 35 cm de hauteur après 3 semaines de stockage au repos.

**Tableau 21 : caractérisation des fractions de suspensions collectées à différentes hauteurs après ajout de 0,5% d'ATMP et 0,5% de PBTC**

| Produit Frais | Granulométrie laser | | | | | | Extrait Sec (%) | Viscosité (mPa.s) |
|---|---|---|---|---|---|---|---|---|
| | d₁₀₀ (µm) | d₉₈ (µm) | d₉₅ (µm) | d₉₀ (µm) | d₅₀ (µm) | d₂₅ (µm) | | |
| | 43,7 | 24,6 | 12,0 | 9,7 | 2,9 | 1,5 | 44,9 | 840 |
| Après 1 semaine | | | | | | | | |
| Fraction haute | 43,7 | 23,9 | 11,5 | 9,3 | 2,8 | 1,4 | 44,6 | 740 |
| Fraction centrale | 43,7 | 24,8 | 12,5 | 9,8 | 2,9 | 1,4 | 45,1 | 840 |
| Fraction basse | 43,7 | 24,4 | 12,2 | 9,7 | 2,9 | 1,4 | 45,3 | 830 |
| Après 3 semaines | | | | | | | | |
| Fraction haute | 43,7 | 25,0 | 12,5 | 9,8 | 2,9 | 1,4 | 44,6 | 790 |
| Fraction centrale | 43,7 | 24,8 | 12,1 | 9,7 | 2,9 | 1,4 | 45,0 | 865 |
| Fraction basse | 43,7 | 27,3 | 14,1 | 10,1 | 2,9 | 1,4 | 45,1 | 880 |

A titre de comparaison, on constate que la suspension avec ajout de 1% de saccharose et 0,26% de polymère Tech 646 n'est plus homogène déjà après 1 semaine.

**Tableau 22 : caractérisation des fractions de suspensions collectées à différentes hauteurs après ajout de 1% de saccharose et 0,66% de polymère Tech 646.**

| Produit Frais | Granulométrie laser | | | | | | Extrait Sec (%) | Viscosité (mPa.s) |
|---|---|---|---|---|---|---|---|---|
| | d₁₀₀ (µm) | d₉₈ (µm) | d₉₅ (µm) | d₉₀ (µm) | d₅₀ (µm) | d₂₅ (µm) | | |
| | 83,9 | 28,7 | 22,9 | 11,5 | 3,3 | 1,5 | 45,2 | 95 |
| Après 1 semaine | | | | | | | | |
| Fraction haute | 83,9 | 30,4 | 23,4 | 10,9 | 2,9 | 1,4 | 26,2 | 20 |
| Fraction centrale | 92,1 | 34,1 | 25,2 | 12,7 | 3,4 | 1,5 | 52,7 | 560 |
| Fraction basse | 92,1 | 32,9 | 25,1 | 12,3 | 3,3 | 1,5 | 53,3 | 635 |
| Après 3 semaines | | | | | | | | |
| Fraction haute | 83,9 | 27,97 | 21,24 | 10,33 | 2,96 | 1,516 | 27,57 | 30 |
| Fraction centrale | 83,9 | 29,46 | 23,54 | 11,48 | 3,211 | 1,498 | 51,89 | 970 |
| Fraction basse | 83,9 | 33,32 | 24,73 | 12,3 | 3,309 | 1,512 | 53,16 | 1170 |

### Exemple 9. Influence de la finesse de la suspension et du dosage d'additifs sur la viscosité et de la décantation

Les essais de l'exemple 2 sont reproduits avec des suspensions selon l'art antérieur à l'exception du fait que le débit du broyeur est ajusté pour obtenir un d₅₀ de 2,4 ou 2,7µm.

La cinétique de décantation est mesurée selon l'exemple 6.

**Tableau 23.: Influence de la granulométrie sur la viscosité d'une suspension de lait de chaux à 45% de matière solide, finement broyée de l'art antérieur**

| Saccharose % | Tech 646% | d₅₀ en µm | viscosité en mPa.s | | | | |
|---|---|---|---|---|---|---|---|
| | | | Frais | 1 semaine | 2 semaines | 3 semaines | 4 semaines |
| 1 | 0,4 | 2,4 | 235 | 800 | 875 | 970 | 935 |
| 1 | 0,4 | 2,7 | 145 | 480 | 560 | 590 | 580 |

**Tableau 24.: Influence de la teneur en polymère Chryso Tech 646 sur la viscosité d'une suspension de lait de chaux à 45% de matière solide, finement broyée de l'art antérieur (d₅₀ = 2.9 µm)**

| Saccharose % | Tech 646 % | viscosité en mPa.s | | | | |
|---|---|---|---|---|---|---|
| | | Frais | 1 semaine | 2 semaines | 3 semaines | 4 semaines |
| 1 | 0,4 | 145 | 480 | 560 | 590 | 580 |
| 1 | 0,5 | 40 | 90 | 110 | 130 | 130 |
| 1 | 0,6 | 35 | 98 | 110 | 112 | 112 |
| 1 | 0,7 | 59 | 193 | 200 | 205 | 220 |

Avec la composition de l'art antérieur, saccharose + polymère Tech 646, on constate qu'une variation de d₅₀ de 2,7 à 2,4 µm induit une forte variation de viscosité.

Augmenter la teneur en polymère de 0,4 à 0,5% entraine également une forte variation de viscosité.

**Tableau 25.: Influence de la teneur en polymère Chryso Tech 646 sur la décantation d'une suspension de lait de chaux à 45% de matière solide, finement broyée de l'art antérieur (d₅₀ = 2.9 µm)**

| Saccharose % | Tech 646 % | décantation (% de liquide surnageant au repos) | | | |
|---|---|---|---|---|---|
| | | | | | |
| | | 1 jour | 1 semaine | 2 semaines | 3 semaines |
| 1 | 0,4 | 1,0 | 2,0 | 2,0 | 2,0 |
| 1 | 0,5 | 8,6 | 8,6 | 8,6 | 8,6 |
| 1 | 0,6 | 5,6 | 10,1 | 10,1 | 10,1 |
| 1 | 0,7 | 12,3 | 14,0 | 14,0 | 14,0 |

Les variations de la granulométrie et du dosage en polymère, couramment rencontrées à l'échelle industrielle, entrainent dès lors de fortes perturbations sur la décantation, dans le cas d'une suspension selon l'art antérieur.

A contrario, selon la présente invention, des variations importantes de dosage en DTPM, de l'ordre de 3 fois plus que la dose recommandée (1%) pour obtenir une suspension de viscosité acceptable, n'entraine pas de modification sensible de viscosité (voir tableau 26).

Les décantations sont faibles et de façon inattendue d'autant plus faible que le dosage en DTPMP est élevé (voir tableau 27).

En conséquence, le DTPMP permet de s'affranchir des variations de production; un surdosage n'entrainant pas d'augmentation de décantation.

**Tableau 26.: Influence de la teneur en DTPMP sur la viscosité d'une suspension de lait de chaux à 45% de matière solide, finement broyée selon l'invention (d₅₀ = 2.4 µm)**

| Acide actif % DTPMP | viscosité en mPa.s | | | | |
|---|---|---|---|---|---|
| | Frais | 1 semaine | 2 semaines | 3 semaines | 4 semaines |
| 0,52 | 1580 | 3600 | 4400 | 4400 | 4400 |
| 1,04 | 710 | 590 | 550 | 530 | 525 |
| 1,56 | 580 | 520 | 480 | 480 | 460 |
| 3,12 | 680 | 560 | 581 | 587 | 590 |

**Tableau 27.: Influence de la teneur en DTPMP sur la décantation d'une suspension de lait de chaux à 45% de matière solide, finement broyée selon l'invention (d₅₀ = 2.4 µm)**

| Acide actif % DTPMP | décantation (% de liquide surnageant au repos) | | | |
|---|---|---|---|---|
| | 1 jour | 1 semaine | 2 semaines | 3 semaines |
| 0,52 | 0,5 | 1,5 | 1,5 | 1,5 |
| 1,04 | 0,5 | 2,5 | 2,5 | 3,0 |
| 1,56 | 1,0 | 2,2 | 2,5 | 2,5 |
| 3,12 | 0,0 | 1,0 | 1,0 | 1,0 |

### Exemple 11. Utilisation du DTPMP selon l'invention afin d'obtenir un produit fini de caractéristique plus constante - Cas d'un lait de chaux broyé de production industrielle.

20 tonnes de lait de chaux selon l'invention à 45% de matière solide avec 3% (exprimé par rapport à l'hydrate) de D5012 commercialisés par Zschimmer and Schwartz sont produits en suivant le même principe de préparation que dans l'exemple 2.

La granulométrie du lait de chaux est ajustée en modifiant le débit de passage (4,6 à 5,2 m3/h) dans le broyeur ainsi que la vitesse de rotation du broyeur (450 à 650 tpm).

**Tableau 28: Influence de la granulométrie sur la viscosité d'une suspension de lait de chaux à 45% de matière solide, finement broyée selon l'invention**

| Acide actif en % DTPMP | Allure de production | Vitesse rotation broyeur | d₅₀ en µm | viscosité en mPa.s | | | | | | |
|---|---|---|---|---|---|---|---|---|---|---|
| | m³/h | tpm | | frais | 1 jour | 1 sem | 2 sem | 3 sem | 4 sem | 12 sem |
| 1,56 | 5,2 | 450 (70%) | 3,2 | 350 | 340 | 300 | 290 | 310 | 310 | 350 |
| 1,56 | 5,1 | 550 (85%) | 3,0 | 430 | 390 | 355 | 340 | 350 | 340 | 415 |
| 1,56 | 4,6 | 650 (100%) | 2,8 | 590 | 490 | 450 | 420 | 430 | 425 | 505 |

| | | | | | | | | | | |
|---|---|---|---|---|---|---|---|---|---|---|
| Sem= semaines | | | | | | | | | | |

On constate qu'une modification du d₅₀ de 2,8 à 3,2 µm ne modifie la viscosité après 4 semaines que de 425 à 310 mPa.s. Même après 12 semaines, la viscosité n'est pas significativement plus élevée dans le premier cas que dans le second.

La décantation quant à elle est faible par comparaison du tableau 29 aux résultats du tableau 25. Par ailleurs, cette décantation augmente très peu avec le temps et reste limitée, même avec des suspensions plus grossières (d₅₀ de 3.2 µm).

**Tableau 29.: Influence de la teneur en DTPMP sur la décantation d'une suspension de lait de chaux à 45% de matière solide, finement broyée selon l'invention**

| Acide actif en % DTPMP | d₅₀ en µm | décantation (% de liquide surnageant au repos) | | | | | |
|---|---|---|---|---|---|---|---|
| | | 1 jour | 1 Sem | 2 Sem | 3 Sem | 4 Sem | 12 Sem |
| 1,56 | 3,2 | 1,0 | 5,5 | 7,0 | 7,2 | 7,2 | 7,5 |
| 1,56 | 3,1 | 1,0 | 4,0 | 5,0 | 5,0 | 5,0 | 5,5 |
| 1,56 | 2,8 | 1,0 | 2,0 | 2,5 | 2,8 | 3,0 | 3,0 |

| | | | | | | | |
|---|---|---|---|---|---|---|---|
| Sem = semaines | | | | | | | |

Il est bien entendu que la présente invention n'est en aucune façon limitée aux formes de réalisations décrites ci-dessus et que bien des modifications peuvent y être apportées sans sortir du cadre des revendications annexées.

## Revendications

1. Suspension aqueuse calco-magnésienne comprenant des particules solides répondant à la formule générale a Ca(OH)₂.bMg(OH)₂.cMgO.dl dans une phase aqueuse à une concentration supérieure ou égale à 200 g/kg, où a, b et c représentent des fractions massiques dont la somme vaut de 90 à 100 % et d vaut de 0 à 10% en fraction massique, I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, et un additif simultanément réducteur de viscosité et modérateur d'augmentation de viscosité, **caractérisée en ce que** ledit additif est un phosphonate ou un acide phosphonique, choisi parmi le groupe constitué des acides aminoalkylène polyphosphoniques, où le radical alkylène contient de 1 à 20 atomes de carbone, des acides hydroxyalkylidène polyphosphoniques, où le radical alkylidène contient de 2 à 50 atomes de carbone, des acides phosphono-alcanepolycarboxyliques, où le groupement alcane contient de 3 à 12 atomes de carbone et où le rapport molaire du radical acide alkylphosphonique au radical acide carboxylique est dans la plage de 1:2 à 1:4, de leurs dérivés, tels que leurs sels, et de leurs mélanges.

2. Suspension aqueuse calco-magnésienne selon la revendication 1, dans laquelle ledit phosphonate ou acide phosphonique comprend, sous forme acide, de 2 à 8, de préférence de 2 à 6 groupes caractéristiques « acide phosphonique ».

3. Suspension aqueuse calco-magnésienne selon la revendication 1 ou la revendication 2, dans laquelle ledit phosphonate ou acide phosphonique est choisi dans le groupe constitué de l'acide aminotris(méthylènephosphonique) (ATMP), de l'acide 1-hydroxyéthylidène-1,1-diphosphonique (HEDP), de l'acide éthylènediamine tetrakis(méthylènephosphonique) (EDTMP), de l'acide hexaméthylènediamine tetrakis(méthylènephosphonique) (HDTMP), de l'acide diéthylènetriamine pentakis(méthylènephosphonique) (DTPMP), de l'acide (2-hydroxy)éthylamino-N,N-bis(méthylènephosphonique) (HEMPA), de l'acide 2-phosphono-1,2,4-butanetricarboxylique (PBTC), de l'acide 6-amino-1-hydroxyhexylène-N,N-diphosphonique (acide néridronique), de l'acide N,N'-bis(3-aminopropyl)éthylènediamine hexakis(méthylènephosphonique), de l'acide bis(hexaméthylènetriamine) pentakis(méthylènephosphonique), de l'oxyde de l'acide aminotris(méthylènephosphonique), de leurs dérivés, tels que leurs sels, et de leurs mélanges

4. Suspension aqueuse calco-magnésienne selon l'une quelconque des revendications 1 à 3, dans laquelle ledit phosphonate ou acide phosphonique est présent à une teneur en acide actif supérieure ou égale à 0,05 % en poids, de préférence supérieure ou égale à 0,1 % en poids, de manière plus préférentielle supérieure ou égale à 0,5 % en poids et en particulier supérieure ou égale à 0,8 % en poids, par rapport au poids total desdites particules solides et dans laquelle ledit phosphonate ou acide phosphonique est présent à une teneur en acide actif inférieure ou égale à 5 % en poids, de préférence inférieure ou égale à 3 % en poids, de manière plus préférentielle inférieure ou égale à 2 % en poids et en particulier inférieure ou égale à 1,5 % en poids, par rapport au poids total desdites particules solides.

5. Suspension aqueuse calco-magnésienne selon l'une quelconque des revendications précédentes, dans laquelle la concentration desdites particules solides dans la phase aqueuse est supérieure ou égale à 300 g/kg et de préférence supérieure ou égale à 350 g/kg, plus préférentiellement supérieure ou égale à 400 g/kg, en particulier supérieure ou égale à 450 g/kg.

6. Suspension aqueuse calco-magnésienne selon l'une quelconque des revendications précédentes, dans laquelle lesdites particules solides présentent une surface spécifique calculée selon la méthode BET comprise entre 4 et 25 m²_{/}g.

7. Suspension aqueuse calco-magnésienne selon l'une quelconque des revendications précédentes, dans laquelle lesdites particules solides présentent un d₅₀ mesuré par granulométrie laser compris entre 1 et 20 µm.

8. Suspension aqueuse calco-magnésienne selon l'une quelconque des revendications précédentes, présentant une viscosité inférieure ou égale à 1500 mPa.s, préférentiellement inférieure ou égale à 1200 mPa.s, plus préférentiellement inférieure ou égale à 1000 mPa.s, avantageusement inférieure ou égale à 800 mPa.s, encore plus avantageusement inférieure à 500 mPa.s, après au moins 2 semaines de stockage, de préférence après 1 mois ou plus.

9. Procédé de fabrication d'une suspension aqueuse calco-magnésienne comprenant une formation de la suspension de particules solides répondant à la formule générale a Ca(OH)₂.b Mg(OH)₂.c MgO.d I, où a, b et c sont des fractions massiques dont la somme vaut de 90 à 100%, d valant 0 à 10% en fraction massique et I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, dans une première phase aqueuse, à une concentration supérieure ou égale à 200 g/kg de particules solides par rapport au poids de la suspension, et une addition d'un additif simultanément réducteur de viscosité et modérateur d'augmentation de viscosité, **caractérisé en ce que** ledit additif est un phosphonate ou acide phosphonique choisi parmi le groupe constitué des acides aminoalkylène polyphosphoniques, où le radical alkylène contient de 1 à 20 atomes de carbone, des acides hydroxyalkylidène polyphosphoniques, où le radical alkylidène contient de 2 à 50 atomes de carbone, des acides phosphono-alcanepolycarboxyliques, où le groupement alcane contient de 3 à 12 atomes de carbone et où le rapport molaire du radical acide alkylphosphonique au radical acide carboxylique est dans la plage de 1:2 à 1:4, de leurs dérivés, tels que leurs sels, et de leurs mélanges.

10. . Procédé de fabrication selon la revendication 9, dans lequel ladite addition dudit phosphonate ou acide phosphonique a lieu à ladite première phase aqueuse, avant, pendant ou après la formation de ladite suspension de particules solides.

11. Procédé de fabrication selon la revendication 9 ou la revendication 10, dans lequel ledit phosphonate ou acide phosphonique est ajouté à de la chaux ou dolomie vive, aux particules solides répondant à la formule générale précitée a Ca(OH)₂.b Mg(OH)₂.c MgO.d.l ou encore à une suspension concentrée ou pâte concentrée desdites particules solides.

12. Procédé selon l'une quelconque des revendications 9 à 11, dans lequel le pH de la première phase aqueuse est ajusté préalablement à l'addition de phosphonate ou acide phosphonique, de façon à garantir la solubilité totale de celui-ci.

13. Procédé de fabrication selon la revendication 9 à 11, dans lequel ledit phosphonate ou acide phosphonique est ajouté sous la forme d'une solution ou suspension dans une deuxième phase aqueuse.

14. Procédé de fabrication selon la revendication 13, dans lequel le pH de la deuxième phase aqueuse est ajusté préalablement à l'addition de phosphonate ou acide phosphonique, de façon à garantir la solubilité totale de celui-ci, en particulier à l'aide d'un additif basique, notamment NaOH, KOH, NH₄OH et analogues.

15. Procédé selon l'une quelconque des revendications 9 à 12, dans lequel ledit phosphonate est ajouté sous forme solide, en particulier sous forme acide ou sous forme de sel.

16. Procédé selon l'une quelconque des revendications 9 à 15, dans lequel ledit phosphonate ou acide phosphonique comprend, sous forme acide, de 2 à 8, de préférence de 2 à 6 groupes caractéristiques « acide phosphonique ».

17. Procédé selon l'une quelconque des revendications 9 à 16, dans lequel ledit phosphonate ou acide phosphonique est choisi dans le groupe constitué de l'acide aminotris(méthylènephosphonique) (ATMP), de l'acide 1-hydroxyéthylidène-1,1-diphosphonique (HEDP), de l'acide éthylènediamine tetrakis(méthylènephosphonique) (EDTMP), de l'acide hexaméthylènediamine tetrakis(méthylènephosphonique) (HDTMP), de l'acide diéthylènetriamine pentakis(méthylènephosphonique) (DTPMP), de l'acide (2-hydroxy)éthylamino-N,N-bis(méthylènephosphonique) (HEMPA), de l'acide 2-phosphono-1,2,4-butanetricarboxylique (PBTC), de l'acide 6-amino-1-hydroxyhexylène-N,N-diphosphonique (acide néridronique), de l'acide N,N'-bis(3-aminopropyl)éthylènediamine hexakis(méthylènephosphonique), de l'acide bis(hexaméthylènetriamine) pentakis(méthylènephosphonique), de l'oxyde de l'acide aminotris(méthylènephosphonique), de leurs dérivés, tels que leurs sels, et de leurs mélanges

18. Procédé selon l'une quelconque des revendications 9 à 17, dans lequel ledit phosphonate ou acide phosphonique est ajouté à une teneur en acide actif supérieure ou égale à 0,05 % en poids, de préférence supérieure ou égale à 0,1 % en poids, de manière plus préférentielle supérieure ou égale à 0,5 % en poids et en particulier supérieure ou égale à 0,8 % en poids, par rapport au poids total des particules solides et dans lequel ledit phosphonate ou acide phosphonique est présent à une teneur en acide actif inférieure ou égale à 5 % en poids, de préférence inférieure ou égale à 3 % en poids, de manière plus préférentielle inférieure ou égale à 2 % en poids et en particulier inférieure ou égale à 1,5 % en poids, par rapport au poids total des particules solides.

19. Utilisation d'un phosphonate ou d'acide phosphonique comme agent simultanément réducteur de viscosité et modérateur de l'augmentation de la viscosité d'une suspension aqueuse calco-magnésienne comprenant des particules solides répondant à la formule générale a Ca(OH)₂.b Mg(OH)₂.c MgO.d.l où a, b et c sont des fractions massiques dont la somme vaut de 90 à 100%, d valant 0 à 10% en fraction massique et I représentant une matière I qui comprend de l'oxyde de calcium, du carbonate de calcium et/ou du carbonate de magnésium, éventuellement combiné sous la forme de dolomie, et/ou des impuretés, à savoir des phases dérivées de SiO₂, Al₂O₃, Fe₂O₃, MnO, P₂O₅ et/ou SO₃, en suspension dans une phase aqueuse à une concentration supérieure ou égale à 200 g/kg, ledit phosphonate ou acide phosphonique étant choisi parmi le groupe constitué des acides aminoalkylène polyphosphoniques, où le radical alkylène contient de 1 à 20 atomes de carbone, des acides hydroxyalkylidène polyphosphoniques, où le radical alkylidène contient de 2 à 50 atomes de carbone, des acides phosphono-alcanepolycarboxyliques, où le groupement alcane contient de 3 à 12 atomes de carbone et où le rapport molaire du radical acide alkylphosphonique au radical acide carboxylique est dans la plage de 1:2 à 1:4, de leurs dérivés, tels que leurs sels, et de leurs mélanges.

20. Utilisation selon la revendication 19, dans laquelle ledit phosphonate ou acide phosphonique comprend, sous forme acide, de 2 à 8, de préférence de 2 à 6 groupes caractéristiques « acide phosphonique ».

## Patentansprüche

1. Wässrige Calcium-Magnesium-Suspension, die Feststoffteilchen der allgemeinen Formel a Ca(OH)₂.bMg(OH)₂.cMgO.dl umfasst, in einer wässrigen Phase bei einer Konzentration von größer oder gleich 200 g/kg, bei der a, b und c Massenanteile darstellen, deren Summe 90 bis 100 % entspricht und d einem Massenanteil von 0 bis 10% entspricht, wobei I ein Material I darstellt, das Calciumoxid, Calciumcarbonat und/oder Magnesiumcarbonat umfasst, gegebenenfalls kombiniert in der Form von Dolomit und/oder Verunreinigungen, das heißt, Phasen, die abgeleitet sind von SiO₂, Al₂O₃, Fe₂O₃, MnO, P₂O₅ und/oder SO₃, und einen Zusatzstoff, der gleichzeitig Viskosität verringert und Viskositätszunahme mäßigt, **dadurch gekennzeichnet, dass** der Zusatzstoff ein Phosphonat oder eine Phosphonsäure ist, ausgewählt aus der Gruppe bestehend aus polyphosphonischen Aminoalkylensäuren, bei denen der Alkylenrest 1 bis 20 Kohlenstoffatome enthält, polyphosphonischen Hydroxylalkylidensäuren, bei denen der Alkylidenrest 2 bis 50 Kohlenstoffatome enthält, Phosphon-Alkanpolycarboxysäuren, bei denen die Alkangruppierung 3 bis 12 Kohlenstoffatome enthält und bei denen das Molverhältnis des Alkylphosphonsäurerests zum Carboxysäurerest im Bereich von 1:2 bis 1:4 liegt, ihren Derivaten, wie ihren Salzen und ihren Mischungen.

2. Wässrige Calcium-Magnesium-Suspension nach Anspruch 1, wobei das Phosphonat oder die Phosphonsäure in Säureform 2 bis 8, vorzugsweise 2 bis 6 charakteristische "Phosphonsäure"-Gruppen umfasst.

3. Wässrige Calcium-Magnesium-Suspension nach Anspruch 1 oder Anspruch 2, wobei das Phosphonat oder die Phosphonsäure ausgewählt ist aus der Gruppe bestehend aus Aminotris(methylenphosphon)säure (ATMP), 1-Hydroxyethyliden-1,1-diphosphonsäure (HEDP), Ethylendiamintetrakis(methylenphosphon)säure (EDTMP), Hexamethylendiamintetrakis(methylenphosphon)säure (HDTMP), Diethylentriaminpentakis(methylenphosphon)säure (DTPMP), (2-Hydroxy)ethylamino-N,N-bis(methylenphosphon)säure (HEMPA), 2-Phosphono-1,2,4-butantricarboxysäure (PBTC), 6-Amino-1-hydroxyhexylen-N,N-diphosphonsäure (Neridronsäure), N,N'-bis(3-Aminopropyl)ethylendiaminhexakis(methylenphosphon)säure, bis(Hexamethylentriamin)pentakis(methylenphosphon)säure, Oxid der Aminotris(methylenphosphon)säure, ihren Derivaten, wie ihren Salzen und ihren Mischungen

4. Wässrige Calcium-Magnesium-Suspension nach einem der Ansprüche 1 bis 3, wobei das Phosphonat oder die Phosphonsäure in einem Gehalt an aktiver Säure von größer oder gleich 0,05 Gew.-%, vorzugsweise größer oder gleich 0,1 Gew.-%, bevorzugter größer oder gleich 0,5 Gew.-% und insbesondere größer oder gleich 0,8 Gew.-% in Bezug auf das Gesamtgewicht der Feststoffteilchen vorliegt und wobei das Phosphonat oder die Phosphonsäure in einem Gehalt an aktiver Säure von kleiner oder gleich 5 Gew.-%, vorzugsweise kleiner oder gleich 3 Gew.-%, bevorzugter kleiner oder gleich 2 Gew.-% und insbesondere kleiner oder gleich 1,5 Gew.-% in Bezug auf das Gesamtgewicht der Feststoffteilchen vorliegt.

5. Wässrige Calcium-Magnesium-Suspension nach einem der vorstehenden Ansprüche, wobei die Konzentration der Feststoffteilchen in der wässrigen Phase größer oder gleich 300 g/kg und vorzugsweise größer oder gleich 350g/kg, bevorzugter größer oder gleich 400g/kg, insbesondere größer oder gleich 450 g/kg ist.

6. Wässrige Calcium-Magnesium-Suspension nach einem der vorstehenden Ansprüche, wobei die Feststoffteilchen eine spezifische Oberfläche, nach dem BET-Verfahren berechnet, zwischen 4 und 25 m²/g aufweisen.

7. Wässrige Calcium-Magnesium-Suspension nach einem der vorstehenden Ansprüche, wobei die Feststoffteilchen einen d₅₀, durch Lasergranulometrie gemessen, zwischen 1 und 20 µm aufweisen.

8. Wässrige Calcium-Magnesium-Suspension nach einem der vorstehenden Ansprüche, die nach mindestens zwei 2 Wochen Lagerung, vorzugsweise nach 1 Monat oder mehr, eine Viskosität von kleiner oder gleich 1500 mPa.s, vorzugsweise kleiner oder gleich 1200 mPa.s, bevorzugter kleiner oder gleich 1000 mPa.s, vorteilhafterweise kleiner oder gleich 800 mPa.s, noch vorteilhafterweise kleiner oder gleich 500 mPa.s aufweist.

9. Verfahren zur Herstellung einer wässrigen Calcium-Magnesium-Suspension, umfassend einer Bildung der Suspension von Feststoffteilchen der allgemeinen Formel a Ca(OH)₂.b Mg(OH)₂.c MgO.d I, bei der a, b und c Massenanteile sind, deren Summe 90 bis 100 % entspricht, wobei d einem Massenanteil von 0 bis 10% entspricht, wobei I ein Material I darstellt, das Calciumoxid, Calciumcarbonat und/oder Magnesiumcarbonat umfasst, gegebenenfalls kombiniert in der Form von Dolomit und/oder Unreinheiten, das heißt, Phasen, die abgeleitet sind von SiO₂, Al₂O₃, Fe₂O₃, MnO, P₂O₅ und/oder SO₃, in einer ersten wässrigen Phase bei einer Konzentration von größer oder gleich 200 g/kg von Festkörperteilchen in Bezug auf das Gewicht der Suspension, und eine Zugabe eines Zusatzstoffs, der gleichzeitig Viskosität verringert und Viskositätszunahme mäßigt, **dadurch gekennzeichnet, dass** der Zusatzstoff ein Phosphonat oder eine Phosphonsäure ist, ausgewählt aus der Gruppe bestehend aus polyphosphonischen Aminoalkylensäuren, bei denen der Alkylenrest 1 bis 20 Kohlenstoffatome enthält, polyphosphonischen Hydroxylalkylidensäuren, bei denen der Alkylidenrest 2 bis 50 Kohlenstoffatome enthält, Phosphon-Alkanpolycarboxysäuren, bei denen die Alkangruppierung 3 bis 12 Kohlenstoffatome enthält und bei denen das Molverhältnis des Alkylphosphonsäurerests zum Carboxylsäurerest im Bereich von 1:2 bis 1:4 liegt, ihren Derivaten, wie ihren Salzen und ihren Mischungen.

10. Herstellungsverfahren nach Anspruch 9, wobei die Zugabe des Phosphonats oder der Phosphonsäure in der ersten wässrigen Phase vor, während oder nach der Bildung der Suspension von Feststoffpartikeln erfolgt.

11. Herstellungsverfahren nach Anspruch 9 oder Anspruch 10, wobei das Phosphonat oder die Phosphonsäure dem Kalk oder dem ungelöschten Dolomit, den Feststoffteilchen der oben genannten allgemeinen Formel a Ca(OH)₂.b Mg(OH)₂.c MgO.d I oder auch einer konzentrierten Suspension oder konzentrierten Paste der Feststoffteilchen zugegeben wird.

12. Verfahren nach einem der Ansprüche 9 bis 11, wobei der pH-Wert der ersten wässrigen Phase vor der Zugabe von Phosphonat oder Phosphonsäure derart angepasst wird, dass deren vollständige Löslichkeit gewährleistet wird.

13. Herstellungsverfahren nach Anspruch 9 bis 11, wobei das Phosphonat oder die Phosphonsäure in der Form einer Lösung oder Suspension einer zweiten, wässrigen Phase zugegeben wird.

14. Herstellungsverfahren nach Anspruch 13, wobei der pH-Wert der zweiten wässrigen Phase vor der Zugabe von Phosphonat oder Phosphonsäure derart angepasst wird, dass deren vollständige Löslichkeit gewährleistet wird, insbesondere mithilfe eines basischen Zusatzstoffs, besonders NaOH, KOH, NH₄OH und dergleichen.

15. Verfahren nach einem der Ansprüche 9 bis 12, wobei das Phosphonat in fester Form zugegeben wird, insbesondere in Säureform oder Salzform.

16. Verfahren nach einem der Ansprüche 9 bis 15, wobei das Phosphonat oder die Phosphonsäure in Säureform 2 bis 8, vorzugsweise 2 bis 6 charakteristische "Phosphonsäure"-Gruppen umfasst.

17. Verfahren nach einem der Ansprüche 9 bis 16, wobei das Phosphonat oder die Phosphonsäure ausgewählt ist aus der Gruppe bestehend aus Aminotris(methylenphosphon)säure (ATMP), 1-Hydroxyethyliden-1,1-diphosphonsäure (HEDP), Ethylendiamintetrakis(methylenphosphon)säure (EDTMP), Hexamethylendiamintetrakis(methylenphosphon)säure (HDTMP), Diethylentriaminpentakis(methylenphosphon)säure (DTPMP), (2-Hydroxy)ethylamino-N,N-bis(methylenphosphon)säure (HEMPA), 2-Phosphono-1,2,4-butantricarboxysäure (PBTC), 6-Amino-1-hydroxyhexylen-N,N'-diphosphonsäure (Neridronsäure), N,N'-bis(3-Aminopropyl)ethylendiaminhexakis(methylenphosphon)säure, bis(Hexamethylentriamin)pentakis(methylenphosphon)säure, Oxid der Aminotris(methylenphosphon)säure, ihren Derivaten, wie ihren Salzen und ihren Mischungen

18. Verfahren nach einem der Ansprüche 9 bis 17, wobei das Phosphonat oder die Phosphonsäure in einem Gehalt an aktiver Säure von größer oder gleich 0,05 Gew.-%, vorzugsweise größer oder gleich 0,1 Gew.-%, bevorzugter größer oder gleich 0,5 Gew.-% und insbesondere größer oder gleich 0,8 Gew.-% in Bezug auf das Gesamtgewicht der Feststoffteilchen zugegeben wird und wobei das Phosphonat oder die Phosphonsäure in einem Gehalt an aktiver Säure von kleiner oder gleich 5 Gew.-%, vorzugsweise kleiner oder gleich 3 Gew.-%, bevorzugter kleiner oder gleich 2 Gew.-% und insbesondere kleiner oder gleich 1,5 Gew.-% in Bezug auf das Gesamtgewicht der Feststoffteilchen vorliegt.

19. Verwendung eines Phosphonats oder einer Phosphonsäure als Mittel, das gleichzeitig Viskosität verringert und Viskositätssteigerung mäßigt bei einer wässrigen Calcium-Magnesium-Suspension, die Feststoffteilchen der allgemeinen Formel a Ca(OH)₂.b Mg(OH)₂.c MgO.d I umfasst, bei der a, b und c Massenanteile sind, deren Summe 90 bis 100 % entspricht, wobei d einem Massenanteil von 0 bis 10% entspricht und I ein Material I darstellt, das Calciumoxid, Calciumcarbonat und/oder Magnesiumcarbonat umfasst, gegebenenfalls kombiniert in der Form von Dolomit und/oder Verunreinigungen, das heißt, Phasen, die abgeleitet sind von SiO₂, Al₂O₃, Fe₂O₃, MnO, P₂O₅ und/oder SO₃, in Suspension in einer wässrigen Phase bei einer Konzentration von größer oder gleich 200 g/kg, wobei das Phosphonat oder die Phosphonsäure aus der Gruppe ausgewählt ist, bestehend aus polyphosphonischen Aminoalkylensäuren, bei denen der Alkylenrest 1 bis 20 Kohlenstoffatome enthält, polyphosphonischen Hydroxylalkylidensäuren, bei denen der Alkylidenrest 2 bis 50 Kohlenstoffatome enthält, Phosphon-Alkanpolycarboxysäuren, bei denen die Alkangruppierung 3 bis 12 Kohlenstoffatome enthält und bei denen das Molverhältnis des Alkylphosphonsäurerests zum Carboxysäurerest im Bereich von 1:2 bis 1:4 liegt, ihren Derivaten, wie ihren Salzen und ihren Mischungen.

20. Verwendung nach Anspruch 19, wobei das Phosphonat oder die Phosphonsäure in Säureform 2 bis 8, vorzugsweise 2 bis 6 charakteristische "Phosphonsäure"-Gruppen umfasst.

## Claims

1. A calco-magnesian aqueous suspension comprising solid particles of the general formula a Ca(OH)₂.bMg(OH)₂.cMgO.dl in an aqueous phase at a concentration greater than or equal to 200 g/kg, where a, b and c represent mass fractions of which the sum is from 90 to 100% and d is from 0 to 10% by mass fraction, where I represents a material I which comprises calcium oxide, calcium carbonate and/or magnesium carbonate, optionally combined in the form of dolomite, and/or impurities, namely phases derived from SiO₂, Al₂O₃, Fe₂O₃, MnO, P₂O₅ and/or SO₃, and an additive that simultaneously reduces viscosity and moderates the increase in viscosity, **characterized in that** said additive is a phosphonate or a phosphonic acid, selected from the group consisting of aminoalkylene polyphosphonic acids, where the alkylene radical contains from 1 to 20 carbon atoms, hydroxyalkylidene polyphosphonic acids where the alkylidene radical contains from 2 to 50 carbon atoms, phosphonoalkane polycarboxylic acids, where the alkane group contains from 3 to 12 carbon atoms and where the molar ratio of the alkylphosphonic acid radical to the carboxylic acid radical is in the range of 1:2 to 1:4, their derivatives, such as their salts, and mixtures thereof.

2. The calco-magnesian aqueous suspension according to claim 1, wherein said phosphonate or phosphonic acid comprises, in acid form, from 2 to 8, preferably from 2 to 6 characteristic "phosphonic acid" groups.

3. The calco-magnesian aqueous suspension according to claim 1 or claim 2, wherein said phosphonate or phosphonic acid is selected from the group consisting of aminotris(methylenephosphonic acid) (ATMP), 1-hydroxyethylidene-1,1-diphosphonic acid (HEDP), ethylenediamine tetrakis(methylenephosphonic acid) (EDTMP), hexamethylenediamine tetrakis(methylenephosphonic acid) (HDTMP), diethylenetriamine pentakis(methylenephosphonic acid) (DTPMP), (2-hydroxy)ethylamino-N,N-bis(methylenephosphonic acid) (HEMPA), 2-phosphono-1,2,4-butanetricarboxylic acid (PBTC), 6-amino-1-hydroxyhexylene-N,N-diphosphonic acid (neridronic acid), N,N'-bis(3-aminopropyl)ethylenediamine hexakis(methylenephosphonic acid), bis(hexamethylenetriamine) pentakis(methylenephosphonic acid), the oxide of aminotris(methylenephosphonic acid), their derivatives such as their salts and their mixtures

4. The calco-magnesian aqueous suspension according to any one of claims 1 to 3, wherein said phosphonate or phosphonic acid is present with an active acid content greater than or equal to 0.05 wt.%, preferably greater than or equal to 0.1 wt.%, more preferably greater than or equal to 0.5 wt.% and in particular greater than or equal to 0.8 wt.%, with respect to the total weight of said solid particles and wherein said phosphonate or phosphonic acid is present at an active acid content of less than or equal to 5 wt.%, preferably less than or equal to 3 wt.%, more preferably less than or equal to 2 wt.% and in particular less than or equal to 1.5 wt.%, with respect to the total weight of said solid particles.

5. The calco-magnesian aqueous suspension according to any one of the preceding claims, wherein the concentration of said solid particles in the aqueous phase is greater than or equal to 300 g/kg and preferably greater than or equal to 350 g/kg, more preferably greater than or equal to 400 g/kg, in particular greater than or equal to 450 g/kg.

6. The calco-magnesian aqueous suspension according to any one of the preceding claims, wherein said solid particles have a specific surface area calculated according to the BET method of between 4 and 25 m²/g.

7. The calco-magnesian aqueous suspension according to any one of the preceding claims, wherein said solid particles have a d₅₀ measured by laser granulometry of between 1 and 20 µm.

8. The calco-magnesian aqueous suspension according to any one of the preceding claims, having a viscosity of less than or equal to 1500 mPa.s, preferably less than or equal to 1200 mPa.s, more preferably less than or equal to 1000 mPa.s, advantageously less than or equal to 800 mPa.s, even more advantageously less than 500 mPa.s, after at least 2 weeks' storage, preferably after 1 month or more.

9. A method of manufacturing a calco-magnesian aqueous suspension comprising forming the suspension of solid particles of the general formula a Ca(OH)₂.b Mg(OH)₂.c MgO.d I, where a, b and c are mass fractions of which the sum is from 90 to 100%, d being from 0 to 10% by mass fraction and I represent a material I which comprises calcium oxide, calcium carbonate and/or magnesium carbonate, optionally combined in the form of dolomite, and/or impurities, namely phases derived from SiO₂, Al₂O₃, Fe₂O₃, MnO, P₂O₅ and/or SO₃, in a first aqueous phase, at a concentration greater than or equal to 200 g/kg of solid particles with respect to the weight of the suspension, and an addition of an additive that simultaneously reduces viscosity and moderates the increase in viscosity, **characterized in that** said additive is a phosphonate or phosphonic acid selected from the group consisting of aminoalkylene polyphosphonic acids, where the alkylene radical contains from 1 to 20 carbon atoms, hydroxyalkylidene polyphosphonic acids, where the alkylidene radical contains from 2 to 50 carbon atoms, phosphonoalkane polycarboxylic acids, where the alkane group contains from 3 to 12 carbon atoms and where the molar ratio of the alkylphosphonic acid radical to the carboxylic acid radical is in the range of 1: 2 to 1:4, their derivatives, such as their salts, and mixtures thereof.

10. The manufacturing method according to claim 9, wherein said addition of said phosphonate or phosphonic acid takes place into said first aqueous phase, before, during or after the formation of said suspension of solid particles.

11. The manufacturing method according to claim 9 or claim 10, wherein said phosphonate or phosphonic acid is added to quicklime or dolomitic quicklime, to solid particles of the above-mentioned general formula a Ca(OH)₂.b Mg(OH)₂.c MgO.d.l or to a concentrated suspension or concentrated paste of said solid particles.

12. The method according to any one of claims 9 to 11, wherein the pH of the first aqueous phase is adjusted prior to the addition of phosphonate or phosphonic acid, so as to ensure the total solubility thereof.

13. The manufacturing method according to claim 9 to 11, wherein said phosphonate or phosphonic acid is added as a solution or suspension in a second aqueous phase.

14. The manufacturing method according to claim 13, wherein the pH of the second aqueous phase is adjusted prior to the addition of phosphonate or phosphonic acid, so as to ensure the total solubility thereof, particularly with the aid of a basic additive, in particular NaOH, KOH, NH₄OH and the like.

15. The method according to any one of claims 9 to 12, wherein said phosphonate is added in solid form, in particular in acid form or in salt form.

16. The method according to any one of claims 9 to 15, wherein said phosphonate or phosphonic acid comprises, in acid form, from 2 to 8, preferably from 2 to 6, characteristic "phosphonic acid" groups.

17. The method according to any one of claims 9 to 16, wherein said phosphonate or phosphonic acid is selected from the group consisting of aminotris(methylenephosphonic acid) (ATMP), 1-hydroxyethylidene-1,1-diphosphonic acid (HEDP), ethylenediamine tetrakis(methylenephosphonic acid) (EDTMP), hexamethylenediamine tetrakis(methylenephosphonic acid) (HDTMP), diethylenetriamine pentakis(methylenephosphonic acid) (DTPMP), (2-hydroxy)ethylamino-N,N-bis(methylenephosphonic acid) (HEMPA), 2-phosphono-1,2,4-butanetricarboxylic acid (PBTC), 6-amino-1-hydroxyhexylene-N,N-diphosphonic acid (neridronic acid), N,N'-bis(3-aminopropyl)ethylenediamine hexakis(methylenephosphonic acid), bis(hexamethylenetriamine) pentakis(methylenephosphonic acid), the oxide of aminotris(methylenephosphonic acid), their derivatives such as their salts and mixtures thereof.

18. The method according to any one of claims 9 to 17, wherein said phosphonate or phosphonic acid is added at an active acid content of greater than or equal to 0.05 wt.%, preferably greater than or equal to 0.1 wt.%, more preferably greater than or equal to 0.5 wt.% and in particular greater than or equal to 0.8 wt.%, based on the total weight of the solid particles and wherein said phosphonate or phosphonic acid has an active acid content of less than or equal to 5 wt.%, preferably less than or equal to 3 wt.%, more preferably less than or equal to 2 wt.% and in particular less than or equal to 1.5 wt.%, with respect to the total weight of the solid particles.

19. Use of a phosphonate or phosphonic acid as an agent that simultaneously reduces viscosity and moderates the increase in viscosity of a calco-magnesian aqueous suspension comprising solid particles of the general formula a Ca(OH)₂.b Mg(OH)₂.c MgO.d.l where a, b and c are mass fractions, the sum of which is from 90 to 100%, d is from 0 to 10% by mass fraction and I represents a material I which comprises calcium oxide, calcium carbonate and/or magnesium carbonate, optionally combined in the form of dolomite, and/or impurities, namely phases derived from SiO₂, Al₂O₃, Fe₂O₃, MnO, P₂O₅ and/or SO₃, suspended in an aqueous phase at a concentration greater than or equal to 200 g/kg, said phosphonate or phosphonic acid being selected from the group consisting of aminoalkylene polyphosphonic acids, where the alkylene radical contains from 1 to 20 carbon atoms, hydroxyalkylidene polyphosphonic acids, where the alkylidene radical contains from 2 to 50 carbon atoms, phosphonoalkanepolycarboxylic acids, where the alkane group contains from 3 to 12 carbon atoms and where the molar ratio of the alkylphosphonic acid radical to the carboxylic acid radical is in the range of 1:2 to 1:4, their derivatives, such as their salts, and mixtures thereof.

20. Use according to claim 19, wherein said phosphonate or phosphonic acid comprises, in acid form, from 2 to 8, preferably from 2 to 6, characteristic "phosphonic acid" groups.
